# EUROPEAN PATENT APPLICATION

(11) **EP 1 707 606 A1**
(43) Date of publication of application: **04.10.2006**
(21) Application number: 06251772.7
(22) Date of filing: 30.03.2006
(51) Int. Cl.: C09D 11/00, C09C 3/00, C09C 3/10

(54) **Colored resin particles, water-based dispersion containing the colored resin particles, and ink for ink-jet printing or color filter**

(30) Priority: 01.04.2005 JP 2005106018; 28.02.2006 JP 2006054142; 28.02.2006 JP 2006054143
(71) Applicant: TODA KOGYO CORPORATION, Hiroshima-shi, Hiroshima-ken (JP)
(72) Inventor: Sakamoto, Muneyoshi, Hatsukaichi-shi Hiroshima-ken (JP); Aoki, Koso, Hiroshima-shi Hiroshima-ken (JP); Shimohata, Yusuke, Hiroshima-shi Hiroshima-ken (JP); Uehara, Kohei, Ohtake-shi Hiroshima-ken (JP)
(74) Representative: Woods, Geoffrey Corlett

(57) **Abstract**

The present invention relates to a colorant as a precursor of inks for ink-jet printing or for display of a color filter, a dispersion containing the colorant, and an ink, more specifically relates to colored resin particles which are excellent in color developability of printed matters, transparency and gloss, and can produce images having an excellent image fastness such as light resistance, water resistance and fixing property, and further which can exhibit an excellent storage stability by itself upon preparing an ink, and is free from clogging of a print head and is excellent in ejection stability upon printing; a water-based dispersion containing the colored resin particles, and an ink for ink-jet printing or an ink for color filter. There are provided colored resin particles which comprise a composite resin, a water-insoluble colorant and water-insoluble inorganic fine particles, wherein the composite resin is a complex of at least one hydrophilic resin and at least one hydrophobic resin which are respectively selected from the group consisting of styrene acrylic resins, silicone resins, polyester resins and urethane resins; a water-based dispersion containing the colored resin particles; an ink for ink-jet printing; and an ink for color filter.

## Description

### BACKGROUND OF THE INVENTION:

The present invention relates to colored resin particles, a water-based dispersion containing the colored resin particles, and an ink for ink-jet printing or an ink for color filter. More particularly, the present invention relates to colored resin particles useful as a colorant capable of providing an ink for ink-jet printing or color filter, which is excellent in color developability of printed matters, transparency and gloss, and can produce images having an excellent image fastness such as light resistance, water resistance and fixing property, and further which can exhibit an excellent storage stability by itself upon preparing the ink, and is free from clogging of a print head and is excellent in ejection stability upon printing; a water-based dispersion containing the colored resin particles, and an ink for ink-jet printing or an ink for color filter.

The ink-jet printing system has been rapidly spread and used in various applications such as offices and photographic markets because the system is performed by a small-size printer at low running costs and nevertheless enables color printing with a high image quality. One of most important factors of the ink-jet printing system is properties of an ink used therein. Conventionally, the ink is mainly made of dyes in the consideration of a good ejection stability at a printer head, a good storage stability of the ink, and a good color developability of printed matters produced therefrom. However, in the application fields such as offices and photographic markets requiring good keeping properties of the ink, the ink-jet printing system using the ink mainly made of dyes tends to suffer from inconveniences such as discoloration of the ink owing to light, water in atmospheric air, or gases such as ozone.

In recent years, water-insoluble colorants such as typically pigments and solvent dyes have been noticed as colorants for ink-jet printing because of excellent keeping properties thereof such as water resistance and light resistance. These water-insoluble colorants are not dissolved in a water-based dispersion medium. For this reason, after the water-insoluble colorants are once dispersed at a high concentration in the water-based dispersion medium to prepare a water-based dispersion, surfactants, water-soluble organic compounds or additives such as pH modifiers and antiseptics, as well as water, are added to the resultant water-based dispersion to produce an ink.

In the water-insoluble colorant, the water-based dispersion or the ink obtained therefrom, in the case where the water-insoluble colorant is not finely dispersed, the resultant images may fail to exhibit a high clarity or definition. Also, in the case where the water-insoluble colorant, etc., are used in printing on OHP sheets by projecting images using a backlight, or for display of a color filter, unless the water-insoluble colorant is finely dispersed to ensure a high transparency, colorful projected images are not attainable. In addition, in the case where the water-insoluble colorant fails to be stably dispersed in the ink in the form of fine particles, there tends to be caused problems such as clogging of nozzles in a printer head.

However, it may be very difficult to finely disperse the water-insoluble colorant. Further, even though the water- insoluble colorant is finely dispersed, it may be difficult to stably maintain the dispersing condition owing to increase in specific surface area and coagulation force thereof. Also, in the case where the water-insoluble colorant is extremely finely dispersed, a behavior of the water-insoluble colorant approaches to that of dyes, resulting in deteriorated light resistance thereof. Therefore, it is required to not only attain a good dispersion stability of the water-insoluble colorant even when the colorant is finely divided into finer particles, but also prevent deterioration in light resistance due to the finely divided colorant.

On the other hand, for the purpose of attaining a good fixing property onto the printing media and a good gloss of the obtained printed matters, the use of resin binders together with the colorant is essential. Conventionally, as the resin binder, a resin solution or a resin emulsion has been added to a dispersion or an ink. However, the addition of such a resin binder tends to cause problems such as degradation of colordevelopability and clogging of a printer head owing to flocculation of the ink.

To solve the above problems such as flocculation by addition of the resin binders, there have been developed the microcapsule dispersion and ink in which a pigment coated with a resin is dispersed (refer to Japanese Patent Applications Laid-open Nos. 9-151342(1997) and 10-140065(1998). Further, there are known a technique of finely dispersing a pigment by preparing easily-dispersible surface oxidized pigment by plasma treatment and coating the surface of the pigment with a resin for the purpose of decreasing a diameter of particles dispersed in the microcapsule dispersion and attaining a good dispersion stability thereof (refer to Japanese Patent Application Laid-open No. 2002-256166), a technique of finely dispersing a pigment in a dispersion by coating the surface of fine composite pigment particles prepared by enclosing inorganic pigment particles in an organic colorant, with a resin (refer to Japanese Patent Application Laid-open No. 2003-268278), and a technique of dispersing a pigment in a dispersion by defining a zeta (ξ) potential and a particle size distribution thereof (refer to Japanese Patent Application Laid-open No. 2003-96353).

That is, in Japanese Patent Application Laid-open Nos. 9-151342(1997) and 10-140065(1998), there are described the dispersion and ink in which the pigment coated with a resin is dispersed, but, the dispersion and the ink may fail to exhibit sufficient transparency and color developability as compared to dyes.

In Japanese Patent Application Laid-open No. 2002-256166, there are described the dispersion and ink which are finely dispersed by coating the plasma-treated easily-dispersible pigment with a resin in order to further reduce the dispersed particle diameter and enhance a transparency, but, the pigment plasma-treated becomes hydrophilic, so that the obtained printed matters tends to be deteriorated in water resistance. In addition, the plasma treatment may fail to provide an excellent industrial productivity.

Also, in Japanese Patent Application Laid-open No. 2003-268278, there is described the pigment dispersion which is finely dispersed by coating fine composite pigment particles prepared by enclosing inorganic pigment particles in an organic colorant, with a resin, but, the inorganic pigment particles enclosed in the organic colorant tend to be deteriorated in light resistance due to a very small thickness of an organic colorant coating layer formed on the respective inorganic pigment particles. In addition, since the composite particles contain the organic colorant and the inorganic pigment particles in substantially identical amounts, in order to allow the pigment dispersion to show a concentration similar to that of ordinary inks in which an organic colorant is dispersed, it is required to coat the respective inorganic pigment particles with a double amount of the organic colorant- As a result, it may be difficult to well disperse the pigment particles in the dispersion owing to increased solid content thereof.

Further, in Japanese Patent Application Laid-open No. 2003-96353, there is described the technique of producing a pigment dispersion by coating the surface of pigment particles with a polymer, and defining an average zeta (ξ) potential thereof in an aqueous solvent as well as a particle size distribution thereof, but, the technique thus described merely relates to a general method for producing a pigment dispersion and general properties thereof.

As a result of the present inventors' earnest study in view of the above conventional problems, it has been found that by complexing a specific composite resin, a water-insoluble colorant and a specific amount of water-insoluble inorganic fine particles, the resultant colored resin particles can be used as a colorant useful for inks for ink-jet printing or color filter which are not only excellent in color developability, transparency and gloss, but also can form images having an excellent fastness such as water resistance, light resistance and fixing property. The present invention has been attained on the basis of the above finding.

### SUMMARY OF THE INVENTION

An object of the present invention is to provide fine colored resin particles stably containing a water-insoluble colorant, and a water-based dispersion containing the colored resin particles, more specifically, fine colored resin particles for ink-jet printing or color filter which are not only excellent in color developability, transparency and gloss, but also can form images having an excellent fastness such as water resistance, light resistance and fixing property, a water-based dispersion containing the colored resin particles, and an ink for ink-jet printing or an ink for color filter.

To accomplish the aim, in a first aspect of the present invention, there are provided colored resin particles which comprise a composite resin comprising at least one hydrophilic resin and at least one hydrophobic resin which are respectively selected from the group consisting of styrene acrylic resins, silicone resins, polyester resins and urethane resins; a water-insoluble colorant; and water-insoluble inorganic fine particles in an amount of 1 to 50% by weight based on the weight of the water-insoluble colorant.

In a second aspect of the present invention, there are provided colored resin particles which comprise a composite resin comprising at least one hydrophilic resin and at least one hydrophobic resin which are respectively selected from the group consisting of styrene acrylic resins, silicone resins, polyester resins and urethane resins; a water-insoluble colorant; and water-insoluble inorganic fine particles in an amount of 1 to 50% by weight based on the weight of the water-insoluble colorant, wherein a cumulative 90% particle diameter (P90) in a number-accumulated particle size distribution of the colored resin particles as measured with respect to a dispersed particle diameter thereof upon being dispersed in a water-based dispersion medium, is not more than 50 nm.

In a third aspect of the present invention, there are provided colored resin particles which comprise a composite resin comprising at least one hydrophilic resin and at least one hydrophobic resin which are respectively selected from the group consisting of styrene acrylic resins, silicone resins, polyester resins and urethane resins; a water-insoluble colorant; and water-insoluble inorganic fine particles in an amount of 1 to 50% by weight based on the weight of the water-insoluble colorant, wherein a cumulative 90% particle diameter (P90) in a number-accumulated particle size distribution of the colored resin particles as measured with respect to a dispersed particle diameter thereof upon being dispersed in a water-based dispersion medium, is from 50 nm to 100 nm.

In a fourth aspect of the present invention, there is provided a water-based dispersion comprising a water-based dispersion medium and colored resin particles which comprise a composite resin comprising at least one hydrophilic resin and at least one hydrophobic resin which are respectively selected from the group consisting of styrene acrylic resins, silicone resins, polyester resins and urethane resins; a water-insoluble colorant; and water-insoluble inorganic fine particles in an amount of 1 to 50% by weight based on the weight of the water-insoluble colorant.

In a fifth aspect of the present invention, there is provided a water-based dispersion comprising a water-based dispersion medium and colored resin particles which comprise a composite resin comprising at least one hydrophilic resin and at least one hydrophobic resin which are respectively selected from the group consisting of styrene acrylic resins, silicone resins, polyester resins and urethane resins; a water-insoluble colorant; and water-insoluble inorganic fine particles in an amount of 1 to 50% by weight based on the weight of the water-insoluble colorant, wherein a cumulative 90% particle diameter (P90) in a number-accumulated particle size distribution of the colored resin particles as measured with respect to a dispersed particle diameter thereof upon being dispersed in a water-based dispersion medium, is not more than 50 nm.

In a sixth aspect of the present invention, there is provided a water-based dispersion comprising a water-based dispersion medium and colored resin particles which comprise a composite resin comprising at least one hydrophilic resin and at least one hydrophobic resin which are respectively selected from the group consisting of styrene acrylic resins, silicone resins, polyester resins and urethane resins; a water-insoluble colorant; and water-insoluble inorganic fine particles in an amount of 1 to 50% by weight based on the weight of the water-insoluble colorant, wherein a cumulative 90% particle diameter (P90) in a number-accumulated particle size distribution of the colored resin particles as measured with respect to a dispersed particle diameter thereof upon being dispersed in a water-based dispersion medium, is from 50 nm to 100 nm.

In a seventh aspect of the present invention, there is provided an ink for ink-jet printing which comprises the colored resin particles as defined in any one of the first to third aspects, or the water-based dispersion as defined in any one of the fourth to sixth aspects.

In an eighth aspect of the present invention, there is provided an ink for color filter which comprises the colored resin particles as defined in any one of the first to third aspects, or the water-based dispersion as defined in any one of the fourth to sixth aspects.

### DETAILED DESCRIPTION OF THE INVENTION

The present invention is described in detail below.

First, there are described the colored resin particles according to the present invention which comprise a composite resin comprising at least one hydrophilic resin and at least one hydrophobic resin which are respectively selected from the group consisting of styrene acrylic resins, silicone resins, polyester resins and urethane resins; a water-insoluble colorant; and water-insoluble inorganic fine particles in an amount of 1 to 50% by weight based on the weight of the water-insoluble colorant.

The colored resin particles according to the present invention are composed of the water-insoluble colorant and the water-insoluble inorganic fine particles which may be optionally surface-treated, which are coated with two kinds of resins, i.e., a hydrophilic resin and a hydrophobic resin.

The hydrophilic resin is such a resin which is dissolved in water when acidic groups in the resin, such as carboxyl groups, a sulfonic groups, sulfate groups and phosphate groups are neutralized by addition of basic compounds. Examples of the suitable hydrophilic resin may include styrene acrylic resins, silicone resins, polyester resins, urethane resins, and resins obtained by copolymerizing two or more kinds of monomers constituting the above resins. Specific examples of the hydrophilic resin may include polymers of monomers selected from the group consisting of styrene-based monomers such as styrene, 2-methylstyrene, 3-methylstyrene, 4-methylstyrene, 4-ethylstyrene, α-methylstyrene, chlorostyrene, bromostyrene, divinylbenzene, trivinylbenzene, 4-methoxystyrene, 4-cyanostyrene, 1-vinylnaphthalene, 2-vinylnaphthalene, 2-vinyl phenanthrene, 3-vinylbenzoic acid, 4-vinylbenzoic acid, vinylsulfonic acid, 4-vinylanisole, 4-vinylaniline, 2-vinylpyridine, 4-vinylpyridine and styrene macromers, and derivatives thereof; polymers of monomers selected from the group consisting of acrylic acid-based monomers such as acrylic acid, methyl acrylate, ethyl acrylate, propyl acrylate, butyl acrylate, ethylhexyl acrylate, octyl acrylate, stearyl acrylate, lauryl acrylate, acrylonitrile, acrylamide, dimethylaminoethyl acrylate, methacrylic acid, methyl methacrylate, ethyl methacrylate, propyl methacrylate, butyl methacrylate, ethylhexyl methacrylate, octyl methacrylate, stearyl methacrylate, lauryl methacrylate, glycidyl methacrylate, methacrylonitrile, methacrylamide, dimethylaminoethyl methacrylate, itaconic acid, methyl itaconate, ethyl itaconate, fumaric acid, dimethyl fumarate, diethyl fumarate, maleic acid, dimethyl maleate, diethyl maleate, crotonic acid, methyl crotonate, ethyl crotonate and methyl methacrylate macromers, and derivatives thereof; styrene-vinyl toluene copolymers; styrene-vinyl naphthalene copolymers; styrene-methyl acrylate copolymers; styrene-ethyl acrylate copolymers; styrene-butyl acrylate copolymers; styrene-octyl acrylate copolymers; styrene-dimethylaminoethyl acrylate copolymers; styrene-methyl methacrylate copolymers; styrene-ethyl methacrylate copolymers; styrene-butyl methacrylate copolymers; styrene-dimethylaminoethyl methacrylate copolymers; styrene-maleic acid copolymers; styrene-maleic half ester copolymers; styrene-maleic diester copolymers; acrylic acid-methacrylic acid copolymers; acrylic acid-methacrylic ester copolymers; styrene-α-methylstyrene-acrylic acid copolymers; styrene-methyl methacrylate-acrylic acid copolymers; styrene-methacrylic acid-acrylic acid copolymers; styrene acrylic resins such as block copolymers, random copolymers or graft copolymers obtained by polymerizing two or more kinds of monomers constituting the above polymers or copolymers; silicone resins such as side chain-modified, one terminal end-modified, both terminal end-modified, side chain/both terminal end-modified silicone oils; polymers obtained by an ester bond between a polycarboxylic acid, e.g., divalent carboxylic acids such as terephthalic acid, isophthalic acid, orthophthalic acid, 2,6-naphthalene dicarboxylic acid, sodium sulfoisophthalate, succinic acid, adipic acid, azelaic acid, sebacic acid, 1,10-decane dicarboxylic acid and dimer acids, or tri- or more valent carboxylic acids such as trimellitic acid and pyromellitic acid, and a polyhydric alcohol, e.g., dihydric alcohols such as ethyleneglycol, 1,2-propyleneglycol, 1,3-propyleneglycol, 1,4-butanediol, 1,5-pentanediol, 1,6-hexanediol, 1,9-nonanediol, neopentylglycol, 3-methyl-1,5-pentanediol, diethyleneglycol, triethyleneglycol, polytetraethyleneglycol, 1,4-cyclohexanedimethanol and ethyleneoxide adducts of bisphenol A, or tri- or more valent alcohols such as trimethylol propane and pentaerythritol; polyester resins such as block copolymers, random copolymers and graft copolymers of monomers constituting the above polymers; polymers obtained by an urethane bond between a polyol such as polypropyleneglycol, polyethyleneglycol, polytetramethyleneglycol, poly(ethylene adipate), poly(diethylene adipate), poly(propylene adipate), poly(tetramethylene adipate), poly(hexamethylene adipate), poly-ε-caprolactone, poly(hexamethylene carbonate) and silicone polyols, and an isocyanate such as tolylene diisocyanate, 4,4-diphenylmethane diisocyanate, xylylene diisocyanate, naphthalene diisocyanate, hexamethylene diisocyanate, hydrogenated tolylene diisocyanate, hydrogenated 4,4-diphenylmethane diisocyanate, isophorone diisocyanate and tetramethylxylylene diisocyanate; urethane resins such as block copolymers, random copolymers and graft copolymers of monomers constituting the above polymers; and resin-resin copolymers such as styrene-acrylic resin-polyester resin copolymers and styrene-acrylic resin-urethane resin copolymers.

The hydrophilic resin is an anionic resin which is styrene acrylic resins, silicone resins, polyester resins, urethane resins, or resins obtained by copolymerizing two or more kinds of monomers constituting the above resins, which have acid groups such as carboxyl groups, sulfonic groups, sulfate groups and a phosphate group neutralized by basic compounds, and have an acid value of usually not less than 50 mg KOH/g, preferably 50 to 300 mg KOH/g, more preferably 100 to 250 mg KOH/g and a weight-average molecular weight of usually 1,000 to 25,000, preferably 1,500 to 20,000, more preferably 2,000 to 18,000.

The hydrophobic resin is such a resin which is insoluble in a water-based dispersion medium and is not hydrophilized even by adding a basic compound or an acidic compound thereto. Examples of the hydrophobic resin may include styrene acrylic resins, silicone resins, polyester resins, urethane resins, or resins obtained by copolymerizing monomers of these resins. In addition, as the hydrophobic resin, there may be used such resins obtained by polymerizing the following monomers in the vicinity of the hydrophilic resin or the water-insoluble colorant through a surfactant, if required.

Examples of the monomers may include styrene-based monomers such as styrene, 2-methylstyrene, 3-methylstyrene, 4-methylstyrene, 4-ethylstyrene, α-methylstyrene, chlorostyrene, bromostyrene, divinylbenzene, trivinylbenzene, 4-methoxystyrene, 4-cyanostyrene, 1-vinylnaphthalene, 2-vinylnaphthalene, 2-vinyl phenanthrene and styrene macromers, and derivatives thereof; acrylic acid-based monomers such as acrylic acid, methyl acrylate, ethyl acrylate, propyl acrylate, butyl acrylate, ethylhexyl acrylate, octyl acrylate, stearyl acrylate, lauryl acrylate, acrylonitrile, acrylamide, methacrylic acid, methyl methacrylate, ethyl methacrylate, propyl methacrylate, butyl methacrylate, ethylhexyl methacrylate, octyl methacrylate, stearyl methacrylate, lauryl methacrylate, glycidyl methacrylate, methacrylonitrile, methacrylamide, itaconic acid, methyl itaconate, ethyl itaconate, fumaric acid, dimethyl fumarate, diethyl fumarate, maleic acid, dimethyl maleate, diethyl maleate, crotonic acid, methyl crotonate, ethyl crotonate and methyl methacrylate macromers, and derivatives thereof; silane-based monomers such as vinyl triahlorosilane, vinyl tris(β-methoxyethoxy)silane, vinyl trimethoxysilane, vinyl triethoxysilane and γ-(methacryloxypropyl)trimethoxysilane, and derivatives thereof; and silicone-based monomers, e.g., one terminal end-modified silicone oils such as methacryloyloxy polydimethylsiloxane, or both terminal end-methacrylic-modified silicone oils, or derivatives thereof. These monomers may be used alone or in combination of any two or more thereof. Also, the hydrophobic resin may simultaneously contain, in addition to the above monomers, different kinds of monomers, e.g., alkyl vinyl monomers such as isoprene, chloroprene, isobutene and 3-methyl-1-butene; vinyl ether monomers such as butyl vinyl ether and isobutyl vinyl ether; vinyl carboxylate monomers such as vinyl formate, vinyl acetate and vinyl propionate; and vinyl halide monomers such as vinyl chloride, vinylidene chloride and vinylidene fluoride, as well as polyfunctional monomers or macromers such as polyoxyethylene macromers and polyoxazoline macromers.

The surfactant used may have a reactive group. Examples of the surfactant having no reactive group may include alkylbenzenesulfonic acid or salts thereof, alkylnaphthalenesulfonic acid or salts thereof, dialkylsulfosuccinic acid or salts thereof, alkyldiphenyletherdisulfonic acid or salts thereof, fatty acids such as stearic acid and oleic acid or salts thereof, polyoxyethylene alkyl ethers such as polyoxyethylene lauryl ether, polyoxyethylene cetyl ether, polyoxyethylene stearyl ether and polyoxyethylene oleyl ether, polyoxyethylene di-styrenated phenyl ether, polyoxyethylene sorbitan monolaurate, polyoxyethylene sorbitan monopalmitate, polyoxyethylene sorbitan monostearate, polyoxyethylene sorbitan monooleate, polyoxyethylene sorbitan triisostearate, polyoxyethylene sorbitol, glycerol monostearate, and glycerol monooleate.

Examples of the surfactant having a reactive group may include vinylsulfonic acid, allylsulfonic acid, 3-acryloyloxyethanesulfonic acid, 2-methylallylsulfonic acid, 2-acryloyloxyethanesulfonic acid, 2-acrylamido-2-methylpropanesulfonic acid, sulfuric esters of allyl alcohol, alkylallylsulfosuccinic acid and salts thereof, and methacryloyloxypolyoxyalkylenesulfuric esters and salts thereof. These surfactants may be used alone or in combination of any two or more thereof.

As to an amount of the hydrophilic resin to the hydrophobic resin, the hydrophobic resin may be used in an amount of usually 20 to 500% by weight, preferably 30 to 300% by weight, more preferably 30 to 200% by weight based on the weight of the hydrophilic resin. When the amount of the hydrophobic resin used is less than 20% by weight, the hydrophilic resin tends to be diffused in the water-based dispersion medium when dispersed therein, resulting in unstable dispersion as well as deteriorated water resistance thereof. When the amount of the hydrophobic resin used is more than 500% by weight, the resultant dispersion tends to exhibit a too high hydrophobic property, resulting in deteriorated function of dispersing in the water-based dispersion medium, so that it may be difficult to use the resultant dispersion as an ink.

The content of the resins (a sum of the hydrophilic resin and the hydrophobic resin) in the colored resin particles is usually 10 to 90% by weight, preferably 15 to 85% by weight, more preferably 20 to 80% by weight based on the weight of the colored resin particles. When the content of the resins in the colored resin particles is less than 10% by weight, the surface properties of the water-insoluble colorant are more dominant when dispersed in the water-based dispersion medium, resulting in deteriorated dispersion stability, so that it may be difficult to use the resultant dispersion as an ink. When the content of the resins in the colored resin particles is more than 90% by weight, the amount of the resin component tends to be too large relative to the water-insoluble colorant. As a result, when the resin component is intended to be dispersed in the water-based dispersion medium at an appropriate concentration, the resultant dispersion tends to be increased in viscosity, so that it may be difficult to use or handle such a high-viscous dispersion.

More specifically, in the case of the colored resin particles according to the second aspect of the present invention, the content of the resins in the colored resin particles is usually 10 to 50% by weight, preferably 15 to 50% by weight, more preferably 20 to 50% by weight based on the weight of the colored resin particles. In the case of the colored resin particles according to the third aspect of the present invention, the content of the resins in the colored resin particles is usually 50 to 90% by weight, preferably 50 to 85% by weight, more preferably 50 to 80% by weight based on the weight of the colored resin particles.

As the water-insoluble colorant contained in the colored resin particles of the present invention, there may be used any colorants as long as they are insoluble in the water-based dispersion medium and the effects of the present invention can be achieved by the use thereof. The water-insoluble colorant is preferably such a colorant which is free from deterioration of quality thereof due to reaction with the water-insoluble inorganic fine particles. Specific examples of the water-insoluble colorant may include organic pigments, inorganic pigments, solvent dyes, disperse dyes and vat dyes which are ordinarily used as colorants for printing inks, paints, resin compositions, etc.

Meanwhile, the water-insoluble colorants may be used in the form of a mixture thereof according to the hue as required. Also, the mixed colorant may be composed of colorants of the same color type or those of two or more different color types.

As the organic pigment, there may be used the following various organic pigments. Examples of organic red-based pigments may include quinacridone pigments such as quinacridone red, azo-based pigments such as permanent carmine and permanent red, condensed azo pigments such as condensed azo red, diketopyrrolopyrrole-based pigments such as DPP red, anthraquinone-based pigments such as diaminoanthraquinolyl red, perylene pigments such as perylene red, or the like. Examples of organic blue-based pigments may include phthalocyanine-based pigments such as metal-free phthalocyanine blue, phthalocyanine blue and fast sky blue, indigo-based pigments such as indigo blue, alkali blue, or the like. Examples of organic yellow-based pigments may include monoazo-based pigments such as Hanza yellow, disazo-based pigments such as benzidine yellow and permanent yellow, condensed azo pigments such as condensed azo yellow, isoindolinone-based pigments such as isoindolinone yellow, anthraquinone-based pigments such as flavanthrone yellow, or the like. Examples of organic green-based pigments may include phthalocyanine-based pigments such as phthalocyanine green, azo metal complex-based pigments such as nitroso green, or the like- Examples of organic orange-based pigments may include perylene pigments such as perylene orange, isoindolinone-based pigments such as isoindolinone orange, anthraquinone-based pigments such as dichloropyranthrone orange, diketopyrrolopyrrole-based pigments such as DPP orange, azo-based pigments such as benzoimidazolone orange and naphthol red, quinacridone, or the like. Examples of organic violet-based pigments may include dioxazine-based pigments such as dioxazine violet, perylene-based pigments such as perylene violet, unsubstituted quinacridone, or the like. Examples of organic brown-based pigments may include azo-based pigments such as benzoimidazolone brown, indigo-based pigments such as thioindigo brown, or the like.

Specific examples of the organic pigment may include Pigment-Red 1, 2, 3, 4, 5, 6, 8, 9, 12, 14, 15, 16, 17, 19, 21, 22, 23, 31, 32, 37, 38, 41, 48, 48:1, 48:2, 48:3, 48:4, 49, 49:1, 49:2, 50:1, 52, 52:1, 52:2, 53, 53:1, 53:2, 53:3, 57, 57:1, 58:4, 60, 63:1, 63:2, 64:1, 68, 81, 81:1, 81:2, 81:3, 81:4, 83, 88, 90:1, 97, 112, 114, 122, 123, 144, 146, 147, 149, 150, 151, 166, 168, 169, 170, 171, 172, 173, 174, 175, 176, 177, 178, 179, 180, 181, 184, 185, 187, 188, 190, 191, 192, 193, 194, 200, 202, 206, 207, 208, 209, 210, 214, 215, 216, 217, 219, 220, 221, 223, 224, 226, 227, 228, 238, 240, 242, 243, 245, 247, 251, 253, 254, 255, 256, 257, 258, 260, 262, 263, 264, 266, 267, 268, 269, 270, 272, 273, 274, 279; Pigment-Blue 1, 1:2, 9, 14, 15, 15:1, 15:2, 15:3, 15:4, 15:5, 15:6, 16, 17:1, 18, 19, 22, 24, 25, 27, 56, 56:1, 57, 60, 61, 61:1, 62, 63, 64, 66, 80, 88; Pigment-Yellow 1, 2, 3, 4, 5, 6, 9, 10, 12, 13, 14, 16, 17, 20, 24, 55, 61, 62, 62:1, 63, 65, 73, 74, 75, 81, 83, 86, 87, 88, 93, 94, 95, 97, 98, 99, 100, 101, 102, 104, 105, 108, 109, 110, 111, 115, 116, 117, 120, 123, 125, 126, 127, 128, 129, 130, 133, 137, 138, 139, 147, 148, 150, 151, 152, 153, 154, 155, 156, 166, 167, 168, 169, 170, 172, 173, 174, 175, 176, 180, 181, 182, 183, 185, 188, 191, 192, 193, 194, 196, 198, 199, 202, 203, 213, 214; Pigment-Black 1, 20, 31, 32; Pigment-Green 1, 7, 8, 10, 36; Pigment-Orange 1, 2, 5, 13, 16, 17, 22, 24, 34, 36, 38, 43, 48, 49, 51, 55, 59, 61, 62, 64, 66, 67, 69, 70, 71, 72, 73, 74, 77; Pigment-Violet 3, 19, 23, 25, 29, 30, 31, 32, 37, 39, 40, 42, 50; Pigment-Brown 1, 23, 25, 27; organic fluorescent pigments (solid solution of fluorescent dye and synthetic resin), or the like.

Examples of the inorganic pigment may include inorganic black-based pigments such as carbon black, lamp black, graphite, magnetite, molybdenum disulfide and baked CuCr; inorganic yellow-based pigments such as goethite, bismuth vanadate, baked TiNiSb and baked FeZn; inorganic blue-based pigments such as baked CoAl, baked CoAlCr, baked CoZnAl and baked CoZnSi; inorganic red-based pigments such as iron oxide red; inorganic green-based pigments such as baked CoCr and baked CoTi; inorganic brown-based pigments such as baked FeCr and baked ZnFeCr; inorganic white-based pigments such as titanium oxide; or the like.

Specific examples of the inorganic pigment may include Pigment-Red 101, 102, 104, 105, 106, 107, 108, 108:1, 113, 230, 231, 232, 233, 235, 236, 275; Pigment-Blue 28, 29, 33, 35, 36, 71, 72, 73, 74; Pigment-Yellow 31, 32, 34, 35, 35:1, 36, 36:1, 37, 37:1, 40, 41, 42, 43, 48, 53, 118, 119, 157, 158, 159, 160, 161, 162, 163, 164, 184, 189; Pigment-Black 6, 7, 8, 9, 10, 11, 12, 13, 14, 19, 22, 23, 24, 25, 26, 27, 28, 29, 30, 34; Pigment-Green 15, 17, 18, 19, 21, 23, 26, 50; Pigment-Orange 20, 21, 23, 75, 78; Pigment-Violet 14, 15, 16, 47, 49; Pigment-Brown 6, 7, 11, 24, 29, 31, 33, 34, 35, 37, 39, 40, 43, 44, 45; Pigment-White 1, 2, 4, 5, 6, 7, 8, 9, 10, 11, 18, 19, 20, 21, 22, 23, 24, 25, 26, 27, 28, 32, 33; Pigment-Metal 1, 2, 3, 4, 5, 6; pearl pigments; inorganic fluorescent pigments; or the like.

Examples of the solvent dyes may include Solvent-Red 1, 2, 3, 4, 8, 13, 18, 23, 24, 25, 26, 27, 30, 32, 43, 44, 45, 49, 51, 52, 60, 72, 73, 79, 89, 91, 92, 109, 111, 122, 124, 127, 132, 135, 146, 168, 179, 195, 197, 218, 242; Solvent-Blue 2, 4, 5, 6, 8, 11, 13, 23, 24, 35, 36, 38, 44, 45, 59, 70, 74, 78, 104, 122, 124; Solvent-Yellow 2, 5, 6, 7, 14, 15, 16, 18, 19, 21, 29, 33, 44, 51, 56, 62, 72, 79, 82, 83, 83:1, 93, 98, 114, 116, 133, 145, 163, 167, 176; Solvent-Black 3, 5, 7, 27, 29, 34, 45; Solvent-Green 1, 3, 5, 7, 28; Solvent-Orange 2, 60, 63, 41, 45, 54, 60, 62, 63, 86; Solvent-Violet 3, 8, 9, 11, 13, 31, 37, 49, 56, 59; Solvent-Brown 1, 41, 43, 53; or the like.

Examples of the disperse dye may include Disperse-Red 1, 4, 11, 13, 50, 54, 58, 60, 72, 73, 74, 82, 86, 88, 91, 92, 93, 111, 126, 127, 134, 135, 143, 145, 146, 152, 153, 154, 159, 164, 167, 167:1, 177, 179, 181, 191, 204, 206, 207, 221, 239, 240, 258, 277, 278, 283, 311, 323, 343, 348, 356, 362, 364; Disperse-Blue 3, 7, 14, 35, 56, 60, 72, 73, 77, 79, 87, 106, 113, 128, 143, 148, 154, 158, 165, 165:1, 165:2, 176, 183, 185, 197, 198, 201, 214, 224, 225, 257, 266, 267, 284, 287, 291, 301, 354, 358, 359, 365, 366, 367, 368; Disperse-Yellow 3, 5, 23, 42, 54, 64, 79, 82, 83, 93, 99, 100, 114, 119, 121, 122, 124, 126, 134, 160, 184, 184:1, 186, 198, 199, 204, 224, 237, 211, 241; Disperse-Green 6:1, 9; Disperse-Orange 1, 3, 11, 25, 29, 30, 31, 31:1, 33, 44, 49, 54, 66, 73, 118, 119, 163; Disperse-Violet 1, 26, 33, 35, 63, 77, 93, 96; Disperse-Brown 1, 19; or the like.

Examples of the vat dye may include Vat-Red 1, 10, 13, 14, 15, 23, 29, 31, 41; Vat-Blue 1, 4, 6, 20, 43; Vat-Yellow 1, 2, 4, 10, 12, 27, 29, 33; Vat-Black 16, 25, 27, 29; Vat-Green 1, 3, 8, 9; Vat-Orange 1, 2, 3, 4, 7, 9, 11, 15, 16; Vat-Violet 1, 9; Vat-Brown 1, 3, 5, 57; or the like.

The content of the water-insoluble colorant in the colored resin particles is usually 10 to 90% by weight, preferably 15 to 85% by weight, more preferably 20 to 80% by weight based on the weight of the colored resin particles. When the content of the water-insoluble colorant in the colored resin particles is less than 10% by weight, the amount of the resin component tends to be too large relative to the water-insoluble colorant. As a result, when the colored resin particles are dispersed in the water-based dispersion medium at an appropriate concentration, the resultant dispersion tends to be increased in viscosity, so that it may be difficult to use or handle such a high-viscous dispersion. When the content of the water-insoluble colorant in the colored resin particles is more than 90% by weight, the surface properties of the water-insoluble colorant are more dominant when dispersed in the water-based dispersion medium, resulting in deteriorated dispersion stability, so that it may be difficult to use the dispersion as an ink.

More specifically, in the case of the colored resin particles according to the second aspect of the present invention, the content of the water-insoluble colorant in the colored resin particles is usually 50 to 90% by weight, preferably 50 to 85% by weight, more preferably 50 to 80% by weight based on the weight of the colored resin particles. In the case of the colored resin particles according to the third aspect of the present invention, the content of the water-insoluble colorant in the colored resin particles is usually 10 to 50% by weight, preferably 15 to 50% by weight, more preferably 20 to 50% by weight based on the weight of the colored resin particles.

The colored resin particles of the present invention contain the water-insoluble inorganic fine particles together with the above water-insoluble colorant. The water-insoluble inorganic fine particles serve as surfactant particles for stabilizing the finely dispersed condition of the resin particles as a whole system. In addition, the water-insoluble inorganic fine particles have an absorption band on a shorter wavelength of ultraviolet and visible light range, and, therefore, can absorb a shorter wavelength light in the ultraviolet and visible light range which is sunlight, light emitted from fluorescent lamps, etc., thereby preventing deterioration of the colorant due to light and improving a light resistance of the resultant printed matters.

The amount of the water-insoluble inorganic fine particles in the colored resin particles is usually 1 to 50% by weight, preferably 1 to 30% by weight based on the weight of the water-insoluble colorant. When the amount of the water-insoluble inorganic fine particles is less than 1% by weight based on the weight of the water-insoluble colorant, the dispersion-stabilizing effect and the light resistance-enhancing effect tend to be lowered. When the content of the water-insoluble inorganic fine particles is more than 50% by weight, the content of the water-insoluble colorant tends to become too small.

The water-insoluble inorganic fine particles of the present invention may be made of an oxide, a hydroxide, a carbonate or a sulfate of at least one element selected from the group consisting of Mg, Ca, Ba, Ti, zr, Ta, V, Nb, Cr, Mo, W, Mn, Fe, Co, Ni, Cu, Ag, Au, Zn, Al, Ga, Si and Ge. Preferred is water-insoluble inorganic fine particles made of such a material having no direct relation to coloration of the particles. Examples of the water-insoluble inorganic fine particles may include silicon oxide particles such as silica particles, titanium oxide particles such as rutile- or anatase-type titanium oxide particles, aluminum compound particles such as alumina particles and boehmite particles, calcium carbonate particles, magnesium compound particles such as magnesia and hydrotalcite, zinc oxide particles, barium sulfate particles, iron oxide particles such as hematite particles, magnetite particles and goethite particles, etc. Among these water-insoluble inorganic fine particles, preferred are silicon oxide particles, titanium oxide particles and aluminum compound particles.

Meanwhile, in the case where the water-insoluble inorganic fine particles themselves have a tinting property, for example, when carbon black is used as the colorant, there may be used water-insoluble inorganic fine particles exhibiting a similar black color tone such as black magnetite particles. Further, there may also be used such water-insoluble inorganic fine particles having a somewhat different color tone from that of the water-insoluble colorant unless the use thereof adversely affects the color tone of the water-insoluble colorant.

The water-insoluble inorganic fine particles may have any suitable shape such as a spherical shape, a granular shape, a polyhedral shape, an acicular shape, a spindle shape, a rice-grain shape, a flake shape, a scale shape and a plate shape. In the consideration of incorporation of the water-insoluble inorganic fine particles into resins and dispersibility thereof in the resins, among these particles, preferred are spherical particles, granular particles and polyhedral particles.

The water-insoluble inorganic fine particles have an average particle diameter of usually 1 to 50 nm, preferably 10 to 45 nm, and a BET specific surface area value of usually 1 to 300 m²/g.

The water-insoluble inorganic fine particles are preferably surface-treated to impart a hydrophobic property thereto for the purposes of preventing the agglomeration due to hydroxyl groups on the surface of the particles and enhancing the surfactant-activity and the affinity to resins. Examples of the hydrophobic surface-treating agents may include silane-based surface-treating agents, titanium-based surface-treating agents, organic compounds capable of binding to the surface of the water-insoluble inorganic fine particles by an organic reaction therewith, surfactants and hydrophobic resins. These surface-treating agents may be used alone or in the form of a mixture of any two or more thereof.

Specific examples of the silane-based surface-treating agents may include methyl trimethoxysilane, methyl triethoxysilane, dimethyl dimethoxysilane, dimethyl diethoxysilane, trimethyl trimethoxysilane, triethyl ethoxysilane, hexyl trimethoxysilane, hexyl triethoxysilane, decyl trimethoxysilane, phenyl trimethoxysilane, phenyl triethoxysilane, diphenyl dimethoxysilane, diphenyl diethoxysilane, triphenyl ethoxysilane, vinyl trimethoxysilane, vinyl triethoxysilane, methacryloxypropyl triethoxysilane, methyl trichlorosilane, dimethyl dichlorosilane, trimethyl chlorosilane, hexamethyl disilazane, hexaphenyl disilazane, trimethyl silane, allyldimethyl chlorosilane, allylphenyl dichlorosilane, benzyldimethyl chlorosilane, bromomethyldimethyl chlorosilane, α-chloroethyl trichlorosilane, β-chloroethyl trichlorosilane, chloromethyldimethyl chlorosilane, trioraganosilane mercaptan, trimethylsilyl mercaptan, triorganosilyl acrylate, vinyldimethyl acetoxysilane, hexamethyl disiloxane, 1,3-divinyltetramethyl disiloxane, and 1,3-diphenyltetramethyl disiloxane.

Specific examples of the titanium-based surface-treating agents may include isopropoxy titanium/triisostearate, isopropoxy titanium/dimethacrylate/isostearate, isopropoxy titanium/tridecyl benzenesulfonate, isopropoxy titanium/trisdioctyl phosphate, isopropoxy titanium/tri-N-ethylaminoethyl aminate, titanium bisdioctylpyrophosphate oxyacetate, bisdioctyl phosphate ethylenedioctylphosphite, di-n-butoxy/bistriethanolaminate titanium, or the like.

Specific examples of the organic compounds capable of bonding to the surface of the water-insoluble inorganic fine particles by an organic reaction therewith may include aliphatic acids such as caproic acid, caprylic acid, capric acid, lauric acid, myristic acid, palmitic acid, stearic acid, oleic acid, behenic acid, tallow fatty acid, castor oil-hardened fatty acid, soybean fatty acid, palmitoleic acid, oleic acid, linoleic acid, α-linolenic acid and γ-linolenic acid, and salts, esters or acid chlorides thereof; higher alcohols such as lauryl alcohol, myristyl alcohol, cetyl alcohol, octyl alcohol, decyl alcohol, setostearyl alcohol, stearyl alcohol, 2-octyl dodecanol and behenyl alcohol; hydrophobic amino acids such as glycine, alanine, phenyl alanine, leucine, isoleucine and valine, or peptides or proteins containing a large amount of the hydrophobic amino acids; thiols such as thiophenol, butane thiol, pentane thiol, hexane thiol, heptane thiol, octane thiol, decyl thiol and dodecyl thiol; alkyl halides such as ethyl chloride, butyl chloride, pentyl chloride, hexyl chloride and benzyl chloride; and acid chlorides such as benzoyl chloride and hexylcarboxychloride.

specific examples of the surfactants may include glycerol monostearate, glycerol monooleate, glycerol monocaprylate, propyleneglycol monostearate, sorbitan monostearate, sorbitan distearate, sorbitan tristearate, sorbitan monooleate, sorbitan dioleate, sorbitan trioleate, sorbitan sesquioleate, sorbitan coconut oil fatty acid ester, sorbitan monopalmitate, isostearyl glyceryl ether, lauryl chloride trimethyl ammonium, cetyl chloride trimethyl ammonium, and stearyl chloride trimethyl ammonium.

Specific examples of the hydrophobic resins may include homopolymers of styrene or substituted styrene such as polystyrene and polyvinyl toluene; styrene-based copolymers such as styrene-propylene copolymers, styrene-vinyl toluene copolymers, styrene-vinyl naphthalene copolymers, styrene-methyl acrylate copolymers, styrene-ethyl acrylate copolymers, styrene-butyl acrylate copolymers, styrene-octyl acrylate copolymers, styrene-dimethylaminoethyl acrylate copolymers, styrene-methyl methacrylate copolymers, styrene-ethyl methacrylate copolymers, styrene-butyl methacrylate copolymers, styrene-dimethylaminoethyl methacrylate copolymers, styrene-vinyl methyl ether copolymers, styrene-vinyl ethyl ether copolymers, styrene-vinyl methyl ketone copolymers, styrene-butadiene copolymers, styrene-isoprene copolymers, styrene-maleic acid copolymers and styrene-maleic ester copolymers; polymethyl methacrylate; polybutyl methacrylate; polyvinyl acetate; polyethylene; polypropylene; polyvinyl butyral; silicone resins; polyester resins; polyamide resins; epoxy resins; polyacrylic resins; rosins; modified rosins; terpene resins; phenol resins; aliphatic or alicyclic hydrocarbon resins; aromatic petroleum resins; paraffin waxes; and carnauba waxes.

The amount of the hydrophobic surface-treating agent used upon the above surface treatment is usually 1 to 50% by weight, preferably 1 to 30% by weight based on the weight of the water-insoluble inorganic fine particles.

Next, the water-based dispersions of the present invention are described.

The water-based dispersions of the present invention comprise the above colored resin particles which comprise a composite resin comprising at least one hydrophilic resin and at least one hydrophobic resin which are respectively selected from the group consisting of styrene acrylic resins, silicone resins, polyester resins and urethane resins, the water-insoluble colorant and the water-insoluble inorganic fine particles in an amount of 1 to 50% by weight based on the weight of the water-insoluble colorant; and a water-based dispersion medium in which the colored resin particles are dispersed.

The water-based dispersion medium used in the water-based dispersion of the present invention may contain water, if required, together with water-soluble organic solvents. The content of the water-soluble organic solvents is usually not more than 50% by weight, preferably 1 to 50% by weight, more preferably 1 to 30% by weight.

Examples of the water-soluble organic solvent may include monohydric alcohols such as methanol, ethanol, 1-propanol and 2-propanol; polyhydric alcohols such as ethyleneglycol, diethyleneglycol, triethyleneglycol, propyleneglycol, dipropyleneglycol, tetraethyleneglycol, hexyleneglycol, polyethyleneglycol, polypropyleneglycol, 1,3-butanediol, 1,5-pentanediol, 1,6-hexanediol and glycerol; polyhydric alcohol alkyl ethers such as ethyleneglycol monoethyl ether, ethyleneglycol monobutyl ether, diethyleneglycol monomethyl ether, diethyleneglycol monoethyl ether, diethyleneglycol monobutyl ether, triethyleneglycol monomethyl ether, triethyleneglycol monoethyl ether, triethyleneglycol monobutyl ether and tetraethyleneglycol monomethyl ether; polyhydric alcohol aryl ethers such as ethyleneglycol monophenyl ether and ethyleneglycol monobenzyl ether; nitrogen-containing heterocyclic compounds such as N-methyl-2-pyrrolidone, 1,3-dimethyl imidazolidinone and γ-butyrolactone; amides such as N,N-dimethyl formamide and urea; amines such as monoethanol amine, diethanol amine and triethanol amine; and sulfur-containing compounds such as thiodiethanol, sulfolane and dimethylsulfoxide. These water-soluble organic solvents may be used alone or in combination of any two or more thereof.

As to the dispersed particle diameter of the water-based dispersion according to the fifth aspect of the present invention using the colored resin particles according to the second aspect of the present invention, a cumulative 10% particle diameter (P10) in a number-accumulated particle size distribution thereof is usually not less than 5 nm, preferably 10 to 30 nm; a cumulative 50% particle diameter (P50) in a number-accumulated particle size distribution thereof is usually not more than 40 nm, preferably 15 to 38 nm; and a cumulative 90% particle diameter (P90) in a number-accumulated particle size distribution thereof is usually not more than 50 nm, preferably 20 to 48 nm.

As to the dispersed particle diameter of the water-based dispersion according to the fifth aspect of the present invention, a particle ratio (P90/P50) of the cumulative 90% particle diameter (P90) in the number-accumulated particle size distribution thereof to the cumulative 50% particle diameter (P50) in the number-accumulated particle size distribution thereof is usually not more than 5, preferably not more than 3, more preferably not more than 2. when the particle ratio (P90/P50) is more than 5, the light scattering tends to be caused, resulting in deteriorated transparency of the dispersion.

The water-based dispersion according to the fifth aspect of the present invention preferably has a viscosity of usually not more than 10.0 mPa·S, preferably not more than 8.0 mPa·S. When the viscosity of the water-based dispersion is more than 10.0 mPa·S, the ink for ink-jet printing which is obtained from the water-based dispersion tends to exhibit a too high viscosity. The lower limit of the viscosity of the water-based dispersion is usually about 1.0 mPa·S.

The content of the colored resin particles in the water-based dispersion according to the fifth aspect of the present invention is usually 1 to 40%, preferably 2 to 30% calculated as a concentration of the water-insoluble colorant. When the concentration of the water-insoluble colorant is less than 1%, the resultant water-based dispersion tends to be insufficient in color strength, so that it may be difficult to use the water-based dispersion as inks for various applications. When the concentration of the water-insoluble colorant is more than 40%, it may be difficult to sufficiently disperse the colorant in the water-based dispersion.

As to the dispersed particle diameter of the water-based dispersion according to the sixth aspect of the present invention using the colored resin particles according to the third aspect of the present invention, a cumulative 10% particle diameter (P10) in a number-accumulated particle size distribution thereof is usually not less than 10 nm, preferably 20 to 60 nm; a cumulative 50% particle diameter (P50) in a number-accumulated particle size distribution thereof is usually not more than 70 nm, preferably 20 to 68 nm; and a cumulative 90% particle diameter (P90) in a number-accumulated particle size distribution thereof is usually from 50 nm to 100 nm, preferably from 50 nm to 95 nm, more preferably from more than 50 nm to 90 nm. When the cumulative 90% particle diameter (P90) in the number-accumulated particle size distribution of the water-based dispersion is more than 100 nm, the resultant water-based dispersion may fail to exhibit a sufficient transparency.

As to the dispersed particle diameter of the water-based dispersion according to the sixth aspect of the present invention, a particle ratio (P90/P50) of the cumulative 90% particle diameter (P90) in the number-accumulated particle size distribution thereof to the cumulative 50% particle diameter (P50) in the number-accumulated particle size distribution thereof is usually not more than 5, preferably not more than 3, more preferably not more than 2. When the particle ratio (P90/P50) is more than 5, the light scattering tends to be caused, resulting in deteriorated transparency of the dispersion.

The water-based dispersion according to the sixth aspect of the present invention preferably has a viscosity of usually not more than 20.0 mPa·S, preferably not more than 16.0 mPa·S. When the viscosity of the water-based dispersion is more than 20.0 mPa·S, the ink for ink-jet printing which is obtained from the water-based dispersion tends to exhibit a too high viscosity. The lower limit of the viscosity of the water-based dispersion is usually about 1.0 mPa·S.

The content of the colored resin particles in the water-based dispersion according to the sixth aspect of the present invention is usually 1 to 40%, preferably 2 to 30% calculated as a concentration of the water-insoluble colorant. When the concentration of the water-insoluble colorant is less than 1%, the resultant water-based dispersion tends to be insufficient in color strength, so that it may be difficult to use the water-based dispersion as inks for various applications. When the concentration of the water-insoluble colorant is more than 40%, it may be difficult to sufficiently disperse the colorant in the water-based dispersion.

Next, the processes for producing the colored resin particles and the water-based dispersion according to the present invention are described.

As the methods for producing the colored resin particles containing the water-insoluble colorant and the water-based dispersion, there are generally known an interfacial deposition method and an interfacial polymerization method. Among these methods, a phase inversion emulsification method and an acid crystallization method as the interfacial deposition method are used for producing the ink for ink-jet printing and the water-based dispersion. However, in these interfacial deposition methods, the resin is bonded to the surface of the colorant only by absorption force therebetween, resulting in the repeated absorption/desorption of the resin, and therefore, unstable dispersion. Further, it may be difficult to apply the resin onto the surface of the colorant with a higher density. For this reason, in the present invention, the interfacial deposition method is used in combination with the interfacial polymerization method to coat the colorant with double coating layers of the resin for the purpose of attaining a good dispersion stability and designing a suitable binder resin. Also, by further adding the surface-treated water-insoluble inorganic fine particles to this system and incorporating the particles together with the water-insoluble colorant into the resin, the resultant colored resin particles and the water-based dispersion can exhibit excellent dispersion stability and light resistance as compared to the conventional ones.

The colored resin particles and the water-based dispersion according to the present invention may be produced through a pre-dispersion step, a polymerization step, an acid crystallization step, a water-washing step, a re-dispersion step and a post-treatment step.

In the pre-dispersion step, the hydrophilized resin is dissolved in the water-based dispersion medium, and then the water-insoluble colorant and the surface-treated water-insoluble inorganic fine particles, if required, together with monomers, surfactans, polymerization initiators, chain transfer agents, etc., are added to the resultant solution, and mixed together using a dispersing apparatus, e.g., a high-speed stirrer such as a homomixer and a homogenizer, a kneading/dispersing device such as a beads mill and a roll mill, or an ultrasonic dispersing device such as an ultrasonic homogenizer, thereby previously dispersing the water-insoluble colorant in the dispersion.

The hydrophilized resin may be produced by adding a basic compound to a hydrophilic resin to neutralize an acid group thereof. More specifically, when the hydrophilic resin is a resin selected from styrene acrylic resins, silicone resins, polyester resins and urethane resins, the hydrophilized resin may be produced by adding the following basic compounds thereto. Examples of the basic compound may include inorganic salts such as sodium hydroxide and potassium hydroxide; ammonia; and organic amines such as trimethylamine, ethylamine, diethylamine, triethylamine, N-methyldiethylamine, morpholine, N,N-dimethylaminoethanol, N,N-diethylaminoethanol, 2-amino-2-rnethyl-l-propanol, monoethanolamine, N-methyldiethanolamine, N-ethyldiethanolamine, diisopropanolamine, diethanolamine and triethanolamine.

In the polymerization step, the dispersion obtained in the previous step is mixed, if required, with monomers, surfactants, polymerization initiators, chain transfer agents, etc., and then subjected to an emulsion polymerization reaction, thereby stably dispersing the colored resin particles in water to obtain a stable water-based dispersion. The polymerization step may be conducted, if required, using the above dispersing apparatus.

The polymerization initiator may be either hydrophobic or hydrophilic. The hydrophobic polymerization initiator may be added before initiating the pre-dispersion step, whereas the hydrophilic polymerization initiator may be added immediately before initiating the polymerization reaction.

Examples of the hydrophobic polymerization initiator may include azo-based polymerization initiators such as 2,2'-azobis(2-methyl butyronitrile), 2,2'-azobisisobutyronitrile, 2,2'-azobis(2,4-dimethyl valeronitrile) and 2,2-azobis(2,4-dimethyl-4-methoxy valeronitrile); and peroxide-based polymerization initiators such as benzoyl peroxide and lauroyl peroxide. Examples of the hydrophilic polymerization initiator may include persulfates such as sodium persulfate and potassium persulfate; peroxides such as hydrogen peroxide; azo-based polymerization initiators such as 2,2'-azobis(2-amidinopropane) dibasic acid salt, 4,4'-azobis(4-cyanovaleric acid), 2,2'-azobis[2-(5-methyl-2-imidazolin-2-yl)propane]dihydrochloride, 2,2'-azobis[2-(2-imidazolin-2-yl)propane] dibasic acid salt and 2,2'-azobis[N-(2-carboxyethyl)-2-methylpropionamide)hydrate; combination of ammonium persulfate and sodium bisulfite; combination of ammonium persulfate and aminoethanol; and redox initiators. These polymerization initiators may be used alone or in combination of any two or more thereof.

Examples of the chain transfer agents may include mercaptans such as octyl mercaptan, n-dodecyl mercaptan, t-dodecyl mercaptan, n-tetradecyl mercaptan and mercaptoethanol; xanthogenate disulfides such as dimethyl xanthogenate disulfide and diisopropyl xanthogenate disulfide; thiuram sulfides such as tetramethylthiuram disulfide and tetrabutylthiuram disulfide; halogenated hydrocarbons such as carbon tetrachloride and ethylene bromide; hydrocarbons such as pentaphenyl ethane; and unsaturated hydrocarbons such as acrolein, methacrolein, allyl alcohol and 2-ethylhexyl thioglycol. These chain transfer agents may be used alone or in combination of any two or more thereof.

In the acid crystallization step, an acid is added to the colored resin particles obtained in the previous polymerization step to oxidize the acidic groups of the hydrophilic resin thereof, so that the colored resin particles are precipitated in the water-based dispersion medium, thereby separating the colored resin particles from impurities such as unreacted monomers and salts which are present in the system. At the same time, this step has such an effect of allowing the resin to be present on the surface of the water-insoluble colorant particles and strongly bonding the resin to the water-insoluble colorant. Examples of the acid added may include inorganic acids such as sulfuric acid, hydrochloric acid and phosphoric acid; and organic acids such as formic acid, acetic acid, citric acid and oxalic acid. The pH value of the precipitated colored resin particles obtained after the acid crystallization step is in the range of usually 2 to 4.

In the water-washing step, the thus precipitated colored resin particles obtained in the acid crystallization step are separated from the water-based dispersion medium by centrifugal separation procedure or filtration procedure such as suction filtration and pressure filtration, and further washed with water to remove the acid added as well as impurities such as unreacted monomers and salts therefrom.

In the re-dispersion step, the precipitated colored resin particles purified in the previous step are mixed with a basic substance to hydrophilize again a part of the hydrophilic resin thereof, and dispersed in water, thereby obtaining a water-based dispersion of the colored resin particles. Examples of the basic substance added may include inorganic salts such as sodium hydroxide, potassium hydroxide and lithium hydroxide; ammonia; and organic amines such as trimethylamine, ethylamine, diethylamine, triethylamine, N-methyldiethylamine, morpholine, N,N-dimethylaminoethanol, N,N-diethylaminoethanol, 2-amino-2-methyl-1-propanol, monoethanolamine, N-methyldiethanolamine, N-ethyldiethanolamine, diisopropanolamine, diethanolamine and triethanolamine. The pH value of the water-based dispersion obtained after the re-dispersion step is in the range of usually 7 to 11.

In the post-treatment step, coarse particles or impurities are removed from the thus obtained water-based dispersion by filtration or centrifugation, and further diluted by adding ion-exchanged water thereto or concentrated by the method such as ultrafiltration, membrane filtration or distillation under reduced pressure, thereby controlling the concentration of the water-based dispersion.

In the present invention, when the colored resin particles need to be removed from the water-based dispersion, the water-based dispersion obtained after the post-treatment may be filtered and dried by ordinary methods.

Since the colored resin particles of the present invention are thus prepared in the water-based dispersion medium, the water-based dispersion obtained after the post-treatment step may be directly used as the water-based dispersion of the present invention.

Next, the ink for ink-jet printing according to the present invention is described.

The ink for ink-jet printing according to the present invention may be produced by diluting the colored resin particles or the water-based dispersion according to the present invention with water, and contains the colored resin particles in an amount of usually 1 to 30%, preferably 2 to 20% calculated as the concentration of the water-insoluble colorant.

The ink for ink-jet printing according to the present invention is composed of the colored resin particles or the water-based dispersion according to the present invention, and water, and may further contain additives such as surfactants, water-soluble organic compounds, pH modifiers, antiseptic agents, etc.

As the surfactant, there may be used anionic surfactants or nonionic surfactants. Examples of the anionic surfactants may include polyoxyethylene alkyl ether acetates, polyoxyethylene alkyl ether sulfuric esters, dodecylbenzenesulfonate, lauric acid salts, etc. Examples of the nonionic surfactants may include polyoxyethylene alkyl ethers, polyoxyethylene alkyl esters, polyoxyethylene sorbitan fatty esters, polyoxyethylene alkyl phenyl ethers, polyoxyethylene alkyl amides, and acetylene glycol-based surfactants such as 2,4,7,9-tetramethyl-5-decyne-4,7-diol, 3,6-dimethyl-4-octyne-3,6-diol and 3,5-dimethyl-l-hexyn-3-ol (e.g., SURFINOL 104, 420, 440, 465, 485, etc., which are produced by Air Products Co., Ltd.). These surfactants may be used alone or in the form of a mixture of any two or more thereof.

Examples of the water-soluble organic compounds may include polyhydric alcohols such as ethyleneglycol, diethyleneglycol, triethyleneglycol, propyleneglycol, dipropyleneglycol, tetraethyleneglycol, hexyleneglycol, polyethyleneglycol, polypropyleneglycol, 1,3-butanediol, 1,5-pentanediol, 1,6-hexanediol and glycerol; polyhydric alcohol alkyl ethers such as ethyleneglycol monoethyl ether, ethyleneglycol monobutyl ether, diethyleneglycol monomethyl ether, diethyleneglycol monoethyl ether, diethyleneglycol monobutyl ether, triethyleneglycol monomethyl ether, triethyleneglycol monoethyl ether, triethyleneglycol monobutyl ether and tetraethyleneglycol monomethyl ether; polyhydric alcohol aryl ethers such as ethyleneglycol monophenyl ether and ethyleneglycol monobenzyl ether; nitrogen-containing heterocyclic compounds such as N-methyl-2-pyrrolidone, 1,3-dimethyl imidazolidinone and γ-butyrolactone; amides such as N,N-dimethyl formamide and urea; amines such as monoethanol amine, diethanol amine and triethanol amine; sulfur-containing compounds such as thiodiethanol, sulfolane and dimethylsulfoxide; and sugars such as glucose, mannose, fructose, ribose, xylose, arabinose, galactose, maltose, cellobiose, lactose, sucrose, trehalose, cellulose, dextrin and cyclodextrin. These water-soluble organic compounds may be used alone or in the form of a mixture of any two or more thereof.

Examples of the pH modifier may include inorganic salts such as sodium hydroxide, potassium hydroxide and lithium hydroxide; ammonia; and organic amines such as trimethylamine, ethylamine, diethylamine, triethylamine, N-methyldiethylamine, morpholine, N,N-dimethylaminoethanol, N,N-diethylaminoethanol, 2-amino-2-methyl-1-propanol, monoethanolamine, N-methyldiethanolamine, N-ethyldiethanolamine, diisopropanolamine, diethanolamine and triethanolamine. These pH modifiers may be used alone or in the form of a mixture of any two or more thereof.

Examples of the antiseptic agents may include alkyl isothiazolone, chloroalkyl isothiazolone, benzisothizolone, bromonitroalcohol, oxazolidine and chloroxylenol. These antiseptic agents may be used alone or in the form of a mixture of any two or more thereof.

As to the dispersed particle diameter of the ink for ink-jet printing according to the present invention, a cumulative 10% particle diameter (P10) in a number-accumulated particle size distribution thereof is usually not less than 5 nm, preferably 10 to 30 nm; a cumulative 50% particle diameter (P50) in a number-accumulated particle size distribution thereof is usually not more than 40 nm, preferably 15 to 38 nm; and a cumulative 90% particle diameter (P90) in a number-accumulated particle size distribution thereof is usually not more than 50 nm, preferably from 20 to 48 nm.

As to the dispersed particle diameter of the ink for ink-jet printing using the colored resin particles according to the second aspect of the present invention or the water-based dispersion according to the fifth aspect of the present invention, a particle ratio (P90/P50) of the cumulative 90% particle diameter (P90) in the number-accumulated particle size distribution thereof to the cumulative 50% particle diameter (P50) in the number-accumulated particle size distribution thereof is usually not more than 5, preferably not more than 3, more preferably not more than 2. When the particle ratio (P90/P50) is more than 5, the light scattering tends to be caused, resulting in deteriorated transparency of the ink.

The ink for ink-jet printing according to the present invention has a viscosity of usually not more than 10.0 mPa·S, preferably not more than 5.0 mPa·S. When the viscosity of the ink for ink-jet printing is more than 10.0 mPa·S, the ink for ink-jet printing may fail to form printed images having a clear hue. The lower limit of the viscosity of the ink for ink-jet printing is usually about 1.5 mPa·S.

As to the storage stability of the ink for ink-jet printing according to the present invention, the percentage of change in dispersed particle diameter after one week is usually not more than 7%, preferably not more than 6%, more preferably not more than 5%, and the percentage of change in viscosity after one week is usually not more than 10%, preferably not more than 8%, more preferably not more than 6%.

As to the dispersed particle diameter of the ink for ink-jet printing using the colored resin particles according to the third aspect of the present invention or the water-based dispersion according to the sixth aspect of the present invention, a cumulative 10% particle diameter (P10) in a number-accumulated particle size distribution thereof is usually not less than 10 nm, preferably 20 to 60 nm; a cumulative 50% particle diameter (P50) in a number-accumulated particle size distribution thereof is usually not more than 70 nm, preferably 20 to 68 nm; and a cumulative 90% particle diameter (P90) in a number-accumulated particle size distribution thereof is usually from 50 nm to 100 nm, preferably from 50 nm to 95 nm, more preferably from more than 50 nm to 90 nm. When the cumulative 90% particle diameter (P90) in the number-accumulated particle size distribution is more than 100 nm, the resultant ink may fail to exhibit a sufficient transparency.

As to the dispersed particle diameter of the ink for ink-jet printing according to the present invention, a particle ratio (P90/P50) of the cumulative 90% particle diameter (P90) in the number-accumulated particle size distribution thereof to the cumulative 50% particle diameter (P50) in the number-accumulated particle size distribution thereof is usually not more than 5, preferably not more than 3, more preferably not more than 2. when the particle ratio (P90/P50) is more than 5, light scattering tends to be caused, resulting in deteriorated transparency of the ink.

The ink for ink-jet printing according to the present invention has a viscosity of usually not more than 10.0 mPa·S, preferably not more than 8.0 mPa·S. When the viscosity of the ink for ink-jet printing is more than 10.0 mPa·S, the ink for ink-jet printing may fail to form printed images having a clear hue. The lower limit of the viscosity of the ink for ink-jet printing is usually about 1.0 mPa·S.

As to the storage stability of the ink for ink-jet printing according to the present invention, the percentage of change in dispersed particle diameter after one week is usually not more than 7%, preferably not more than 5%, and the percentage of change in viscosity after one week is usually not more than 10%, preferably not more than 8%, more preferably not more than 6%.

Next, the process for producing the ink for ink-jet printing according to the present invention is described.

The ink for ink-jet printing according to the present invention may be produced by blending a predetermined amount of the colored resin particles or the water-based dispersion according to the present invention with ion-exchanged water, if required, together with additives such as surfactants, water-soluble organic compounds, pH modifiers and antiseptic agents, and then subjecting the obtained mixture to filtration using a membrane filter, centrifugation or both thereof.

Next, the ink for color filter according to the present invention is described.

The ink for color filter according to the present invention may be produced by diluting the colored resin particles or the water-based dispersion with water, and contains the colored resin particles in an amount of usually 1 to 30%, preferably 2 to 20% when calculated as the concentration of the water-insoluble colorant.

The ink for color filter according to the present invention is composed of the colored resin particles or the water-based dispersion according to the present invention, and water, and may further contain a resin aqueous solution, a resin emulsion and the same additives as described above with respect to the ink for ink-jet printing, such as surfactants, water-soluble organic compounds, pH modifiers, antiseptic agents, etc.

Examples of resins contained in the above resin aqueous solution or resin emulsion may include polyvinyl alcohol, polyacrylamide, acrylic polymers, polyesters, urethanes, fluororesins and melamine resins. These resins may be used alone or in the form of a mixture of any two or more thereof.

Next, the process for producing the ink for color filter according to the present invention is described.

The ink for color filter according to the present invention may be produced by blending a predetermined amount of the colored resin particles or the water-based dispersion according to the present invention with ion-exchanged water, if required, together with a resin aqueous solution, a resin emulsion and additives such as surfactants, water-soluble organic compounds, pH modifiers and antiseptic agents, and then subjecting the obtained mixture to filtration using a membrane filter, centrifugation or both thereof.

The colored resin particles of the present invention are such particles obtained by enclosing the water-insoluble colorant and the water-insoluble inorganic fine particles with the two kinds of resins, i.e., hydrophilic and hydrophobic resins. Among the two kinds of resins, the hydrophilic resin acts for assisting the colored resin particles to be dispersed in the water-based dispersion medium, whereas the hydrophobic resin is complexed and entangled with the hydrophilic resin to prevent the hydrophilic resin from being diffused into the water-based dispersion medium, thereby exhibiting not only a good dispersion stability upon preparing the water-based dispersion or the ink, but also a high ink ejecting property when used in an ink-jet printing system. Further, the resin composition serves for allowing the obtained printed matters to exhibit a high gloss, a high fixing property and a high water resistance. Also, in the case where the surface-treated water-insoluble inorganic fine particles are contained in the colored resin particles, the water-insoluble inorganic fine particles may function as surfactant particles, so that the colored resin particles can be enhanced in dispersibility, thereby exhibiting a high color developability as well as a high transparency. In addition, it is considered that since the water-insoluble inorganic fine particles serve for absorbing a shorter wavelength-side light after printing, the colorant can be prevented from undergoing deterioration due to light, resulting in enhanced light resistance.

The water-based dispersion of the present invention comprises the colored resin particles having the above properties, and therefore, not only can exhibit a high dispersion stability, but also can provide printed matters exhibiting a high color developability, a high gloss, a high transparency, a high water resistance, a high light resistance and a high fixing property.

The ink for ink-jet printing according to the present invention comprises the colored resin particles having the above properties or the water-based dispersion thereof, and therefore, not only can exhibit a high dispersion stability and a high ink ejecting property when used in an ink-jet printing system, but also can provide printed matters exhibiting a high color developability, a high gloss, a high transparency, a high water resistance, a high light resistance and a high fixing property.

The ink for color filter according to the present invention comprises the colored resin particles having the above properties or the water-based dispersion thereof, and therefore, not only can exhibit a high dispersion stability, but also can provide a color filter exhibiting a high color developability and a high transparency.

The colored resin particles of the present invention are such particles obtained by incorporating the water-insoluble colorant and the surface-treated water-insoluble inorganic fine particles in the resin particles. Thus, when the surface-treated water-insoluble inorganic fine particles are contained in the colored resin particles, the water-insoluble inorganic fine particles may function as surfactant particles, so that the colored resin particles can be enhanced in dispersibility, thereby exhibiting excellent color developability and transparency. In addition, since the water-insoluble inorganic fine particles serve for absorbing a shorter wavelength light after printing, the colorant can be prevented from undergoing deterioration due to light, resulting in enhanced light resistance. Further, since the resin particles are made of a composite resin composed of the hydrophilic and hydrophobic resins, the obtained images can exhibit an excellent gloss as well as a good image fastness such as water resistance, light resistance and fixing property. In addition, the colored resin particles exhibit a good dispersion stability upon preparing the water-based dispersion or the ink, and therefore, can be suitably used as a colorant which is a precursor of an ink for ink-jet printing or an ink for color filter.

The water-based dispersion of the present invention comprises the colored resin particles having the above properties, and therefore, is excellent in color developability, transparency and gloss, and can provide images having an excellent image fastness such as water resistance, light resistance and fixing property. Further, the water-based dispersion can exhibit a good dispersion stability either by itself or upon preparing the ink, and therefore, can be suitably used as a colorant dispersion which is a precursor of an ink for ink-jet printing or an ink for color filter.

The ink for ink-jet printing according to the present invention is composed of the colored resin particles having the above properties or the water-based dispersion thereof, and therefore, is not only excellent in color developability, transparency and gloss, but also can provide images having a good image fastness such as water resistance, light resistance and fixing property. Further, the ink for ink-jet printing has a good dispersion stability, and therefore, can be suitably used as an ink for ink-jet printing.

The ink for color filter according to the present invention comprises the colored resin particles having the above properties or the water-based dispersion thereof, ,, is not only excellent in color developability, transparency and gloss, but also can provide images having a good image fastness such as water resistance, light resistance and fixing property. Further, the ink for color filter has a good dispersion stability, and therefore, can be suitably used as an ink for color filter.

### EXAMPLES

The present invention is described in more detail by Examples. Meanwhile, the terms "part(s)" and "%" used herein represent "part(s) by mass" and "% by mass", respectively. However, the Examples are only illustrative and not intended to limit the scope of the present invention.

Various properties were evaluated by the following methods.
(1) The infrared absorption spectrum was measured using a Fourier transform infrared spectrophotometer "FTIR-8700" (manufactured by Shimadzu Co., Ltd.).
(2) The average particle diameter was expressed by a cumulative 50% particle diameter (D50) in a number-accumulated particle size distribution which was calculated by analyzing a transmitted image of particles photographed by a transmission electron microscope "JEM1200EX02" (manufactured by Nippon Bunko Co., Ltd.), using an image analyzing software "ANALYSIS PRO" (produced by Soft Imaging System Co., Ltd.).
(3) The BET specific surface area was measured using "MONOSORB MS-21" (manufactured by Yuasa Ionics Co., Ltd.).
(4) The carbon content was measured using a carbon and sulfur analyzing apparatus "EMIA-820W" (manufactured by HORIBA, Ltd.).
(5) The dispersed particle diameter was expressed by a cumulative 10% particle diameter (P10), a cumulative 50% particle diameter (P50) and a cumulative 90% particle diameter (P90) in a number-accumulated particle size distribution as measured by a concentration-type particle size analyzer "FPAR-1000" (manufactured by Otsuka Electronics Co., Ltd.).
(6) The viscosity was measured using an E-type viscometer "TV-30" (manufactured by Toki Sangyo Co., Ltd.).
(7) The concentration of the water-insoluble colorant was calculated by measuring an absorption coefficient at a maximal wavelength of ultraviolet and visible light absorption spectrum using a UV-VIS spectrophotometer "UV-2100" (manufactured by Shimadzu Co., Ltd.), and comparing the measured absorption coefficients of the respective water-insoluble colorants with each other.

### (8) Storage stability:

The storage stability was determined by measuring the dispersed particle diameters before and after allowing the dispersion to stand for 3 weeks from the preparation thereof by the same method as defined above, and calculating the percentage of change in dispersed particle diameter therebetween. The storage stability was evaluated by classifying the results into the following four ranks:
A: Substantially no change in dispersed particle diameter;
B: The percentage of change in dispersed particle diameter was less than 10%;
C: The percentage of change in dispersed particle diameter was 10 to 50%; and
D: The percentage of change in dispersed particle diameter was more than 50%.

### (9) Ink ejecting property:

The ink ejecting property was determined as follows. That is, using an ink-jet printer "PX-V600" (manufactured by Epson Corp.), which was filled with the ink for ink-jet-printing according to the present invention, a solid printing was conducted on an A4-size PPC paper "Clean" (produced by Nippon Paper Industries Co., Ltd.). The ink ejecting property was evaluated by classifying the results into the following three ranks:
A: 50 or more sheets were printed without thin spot;
B: Thin spot was caused between 11th and 49th printed sheets; and
C: This spot was caused within 10 printed sheets.

### (10) Color developability on PPC paper:

The color developability on PPC paper was determined by measuring an optical density (OD value) of printed matters obtained by conducting a solid printing on an A4-size PPC paper "Clean" (produced by Nippon Paper Industries Co., Ltd.), using a spectrodensitometer " 939" (manufactured by X-Rite Inc.). The color developability was evaluated by classifying the results into the following three ranks:
A: Not less than 1.10 (as OD value);
B: From 0.95 to less than 1.10; and
C: Less than 0.95.

### (11) Gloss on glossy paper:

The gloss on glossy paper was determined by measuring a 20° gloss of a solid image printed on an A4-size photographic paper <glossy> KA420PSK (produced by Epson Corp.), as well as a 20° gloss on a non-printed portion of the photographic paper using a digital angle change glossmeter "UGV-5D" (manufactured by Suga Test Instruments Co., Ltd.), to obtain a difference in gloss therebetween. The gloss on glossy paper was evaluated by classifying the results into the following three ranks:
A: Not less than +5 (as difference in gloss):
B: From 0 to less than +5; and
C: Less than 0.

### (12) Transparency:

The transparency was determined by measuring a haze value of a solid image printed on a special OHP sheet "MJ0PS1N" (produced by Epson Corp.), using a haze meter "Haze-gardz" (manufactured by Toyo Seiki Seisakusho Co., Ltd.). The transparency was evaluated by classifying the results into the following three ranks:
A: Less than 10 (as haze value on printed portion);
B: From 10 to less than 20; and
C: Not less than 20.

### (13) Light resistance:

The light resistance was measured as follows. That is, a solid printing was conducted on an A4-size photographic paper <glossy> "KA420PSK" (produced by Epson Corp.), by the same method as defined above, and the thus solid-printed photographic paper was set to an UV tester "EYE-SUPER SUV-W13" (manufactured by Iwasaki Electric Co., Ltd.), and irradiated with an ultraviolet ray (limited wavelength: 295 to 450 nm) having a luminous intensity of 100 mW/cm² at a temperature of 50°C and a humidity of 60% to measure respective OD values before the UV irradiation and after the elapse of 50 hr from the UV irradiation, and calculate a residual percentage of the optical density according to the following formula:

Residual OD percentage (%) = (OD value after elapse of 50 hr from UV irradiation/OD value before UV irradiation) x 100.

The light resistance was evaluated by classifying the results into the following three ranks:
A: Not less than 70% (as residual OD percentage);
B: From 30% to less than 70%; and
C: Less than 30%.

### (14) Water resistance:

The water resistance was determined as follows. That is, a solid printing was conducted on an A4-size PPC paper "Clean" (produced by Nippon Paper Industries Co., Ltd.), by the same method as defined above, and the paper was dried and then immersed in water to examine whether any bleeding of the solid image was caused. The water resistance was evaluated by classifying the results into the following two ranks:
A: No bleeding was caused; and
B: Bleeding was caused.

### (15) Fixing property:

The fixing property was determined as follows. That is, a solid printing was conducted on the same A4-size photographic paper <glossy> "KA420PSK" as used above which was produced by Epson Corp., and the thus solid-printed paper was dried and then subjected to a peel test using a cellophane tape. The fixing property was evaluated by classifying the results into the following two ranks:
A: No peeling was caused; and
B: Peeling was caused.

### Surface Treatment Example 1:

100 parts by weight of silica particles produced by Nippon Silica Kogyo Co., Ltd., (average particle diameter: 20 nm; BET specific surface area: 200 m²/g; carbon content: 0.0% by weight) was suspended in 300 parts by weight of toluene and 8 parts by weight of diethylamine. The resultant suspension was mixed with 12 parts by weight of methyl triethoxysilane, and the resultant mixture was stirred using agitation blades for 30 min. Thereafter, the mixture was heated to 60°C and stirred for 2 hr. The obtained suspension was allowed to stand for cooling, and the resultant solid was separated therefrom by filtration, washed with toluene and then dried by a vacuum drier (60°C, 20 mmHg), thereby obtaining a white solid. As a result of measurement of the infrared absorption spectrum, the obtained solid was identified as silica surface-treated with methyl silane. The resultant methyl silane-surface-treated silica (surface treated silica 1) had an average particle diameter of 20 nm, a BET specific surface area of 147 m²/g and a carbon content of 1.5% by weight.

### Surface Treatment Example 2:

The same procedure as defined in Surface Treatment Example 1 was conducted except that methyl triethoxysilane was replaced with hexamethyl disilazane, thereby obtaining silica surface-treated with trimethyl silane (surface-treated silica 2). As a result, it was confirmed that the surface-treated silica 2 had an average particle diameter of 20 nm, a BET specific surface area of 99 m²/g and a carbon content of 2.5% by weight.

### Surface Treatment Example 3:

The same procedure as defined in Surface Treatment Example 1 was conducted except that methyl triethoxysilane was replaced with phenyl triethoxysilane, thereby obtaining silica surface-treated with phenyl silane (surface-treated silica 3). As a result, it was confirmed that the surface-treated silica 3 had an average particle diameter of 17 nm, a BET specific surface area of 142 m²/g and a carbon content of 1.8% by weight.

### Surface Treatment Example 4:

The same procedure as defined in Surface Treatment Example 1 was conducted except that the silica particles were replaced with titanium oxide (rutile-type; average particle diameter: 15 nm; BET specific surface area: 100 m²/g) produced by Teika Co., Ltd., thereby obtaining titanium oxide surface-treated with methyl silane (surface-treated titanium oxide 1). As a result, it was confirmed that the surface-treated titanium oxide 1 had an average particle diameter of 17 nm, a BET specific surface area of 75 m²/g and a carbon content of 0.5% by weight.

### Surface Treatment Example 5:

The same procedure as defined in Surface Treatment Example 1 was conducted except that the silica particles were replaced with alumina (average particle diameter: 13 nm; BET specific surface area: 100 m²/g) produced by Nippon Aerogel Co., Ltd., thereby obtaining alumina surface-treated with methyl silane (surface-treated alumina 1). As a result, it was confirmed that the surface-treated alumina 1 had an average particle diameter of 16 nm, a BET specific surface area of 68 m²/g and a carbon content of 0.5% by weight.

### Example 1: Water-based dispersion of colored resin particles containing C.I. Pigment-Red 122

### (Pre-dispersion step)

5 parts by weight of a styrene-α-methylstyrene-acrylic acid copolymer (weight-average molecular weight: 12,000; acid value: 200 mg KOH/g) as a hydrophilic resin was dissolved in 10 parts by weight of a 1 mol/kg sodium hydroxide aqueous solution, and the resultant solution was mixed with 10 parts by weight of C.I. Pigment-Red 122, 1 part by weight of the surface-treated silica 1, 1 part by weight of sodium alkylallylsulfosuccinate, 2 parts by weight of styrene, 1 part by weight of methyl methacrylate and 70 parts by weight of ion-exchanged water. The obtained mixture was dispersed using a beads mill filled with 0.1 mmφ zirconia beads at 2000 rpm for 30 min, thereby obtaining a dispersion of particles having a cumulative 50% particle diameter (P50) of 22 nm in a number-accumulated particle size distribution thereof.

### (Polymerization step)

The thus obtained dispersion was mixed with 0.1 part by weight of 2,2'-azobis[N-(2-carboxyethyl)-2-methylpropionamide]hydrate, and the resultant mixture was placed in a four-necked flask equipped with a thermometer, a nitrogen gas-feed pipe, a stirrer and a reflux condenser. The monomer components which were dispersed and emulsionized in the dispersion at the pre-dispersion step, were polymerized at 80°C for 3 hr in a nitrogen atmosphere, and then allowed to stand for cooling.

### (Acid crystallization step)

The thus obtained dispersion was mixed with 1 mol/kg hydrochloric acid to adjust a pH value thereof to not more than 3, thereby obtaining an agglomerated precipitate.

### (Water-washing step)

The thus obtained precipitate was subjected to suction filtration using a 0.8 µm-mesh membrane filter, and washed with ion-exchanged water, thereby obtaining a wet cake having a pH value of 5.5. The obtained wet cake was mixed with a 1 mol/kg sodium hydroxide aqueous solution as a basic compound to adjust a pH value thereof to 8.

### (Re-dispersion step)

The resultant mixture was dispersed again using a beads mill filled with 0.1 mmφ zirconia beads at 2000 rpm for 30 min. Then, a water-based dispersion of the colored resin particles (crude) was obtained.

### (Post-treatment step)

The thus obtained water-based dispersion of colored resin particles (crude) was filtered through a 0.8 µm-mesh millipore filter to remove coarse particles therefrom, and the resultant filtrate was mixed with a slight amount of ion-exchanged water to adjust a concentration of the colorant contained therein to 10%, thereby obtaining a water-dispersion of colored resin particles according to the present invention.

As a result, it was confirmed that the thus obtained water-based dispersion had such a dispersed particle diameter in which a cumulative 10% particle diameter (P10) in a number-accumulated particle size distribution thereof was 18 nm, a cumulative 50% particle diameter (P50) therein was 30 nm, and a cumulative 90% particle diameter (P90) therein was 42 nm, and the dispersion exhibited a viscosity of 5 inpa.s.

Further, the following procedure was conducted to analyze the composition of the colored resin particles.

A part of the thus obtained water-based dispersion of the colored resin particles was mixed with 1 mol/kg hydrochloric acid to condense the colored resin particles, and the condensed colored resin particles were filtered, washed with water and then dried. Next, 1.00 part by weight of the colored resin particles were sampled, and extracted with toluene using a Soxhlet's extractor to separate and transfer the resin components into toluene. The amount of the remaining insoluble component was 0.55 part by weight. As a result of measuring an infrared absorption spectrum of the insoluble component, it was confirmed that the insoluble component was composed of a quinacridone pigment as the water-insoluble colorant and the surface-treated silica 1 as the water-insoluble inorganic fine particles. The insoluble component was mixed with a mixed solvent composed of 3 parts by weight of dimethylsulfoxide and 1 part by weight of a 10% methanol solution of potassium hydroxide to dissolve quinacridone as the water-insoluble colorarit therein. As a result, it was confirmed that the amount of the remaining surface-treated silica 1 as the water-insoluble inorganic fine particles was 0.05 part by weight, and therefore, the amount of the water-insoluble colorant dissolved was 0.50 part by weight.

Next, the toluene solution containing the extracted resin component was filled in a separatory funnel, and a 1 mol/kg sodium hydroxide aqueous solution was added thereto to subject the toluene solution to an extraction procedure. As apparently recognized, the resin remaining in the toluene phase was a hydrophobic resin, whereas the resin extracted into the water phase was a hydrophilic resin. Then, the toluene phase and the water phase were separated from each other, and respectively concentrated. The respective resin components contained in the toluene and water phases were precipitated by adding hexane to the toluene phase and 1 mol/kg hydrochloric acid to the water phase, dried and then recovered. The amount of the hydrophobic resin recovered was 0.20 part by weight, whereas the amount of the hydrophilic resin recovered was 0.25 part by weight.

From the above results, it was confirmed that the colored resin particles contained the water-insoluble colorant and the water-insoluble inorganic fine particles in amounts of 50% by weight and 5% by weight, respectively, and further the water-insoluble inorganic fine particles were contained in an amount of 10% by weight based on the weight of the water-insoluble colorant. Also, it was confirmed that the colored resin particles contained the hydrophobic resin and the hydrophilic resin in amounts of 20% by weight and 25% by weight, respectively, i.e., a total resin content thereof was 45% by weight, and further the hydrophobic resin was contained in an amount of 80% by weight based on the weight of the hydrophilic resin.

### Example 2: Water-based dispersion of colored resin particles containing C.I. Pigment-Red 122

The same procedure as defined in Example 1 was conducted except that the surface-treated silica 1 was replaced with the surface-treated silica 2; and the styrene-α-methylstyrene-acrylic acid copolymer as the hydrophilic resin was replaced with a styrene-maleic half ester copolymer (weight-average molecular weight: 8,000; acid value: 200 mg KOH/g), thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 17 nm, a cumulative 50% particle diameter (P50) therein was 27 nm, and a cumulative 90% particle diameter (P90) therein was 42 nm, and the dispersion exhibited a viscosity of 4 mPa·S.

### Example 3: Water-based dispersion of colored resin particles containing C.I. Pigment-Red 122

The same procedure as defined in Example 1 was conducted except that 1 part by weight of the surface-treated silica 1 was replaced with 0.5 part by weight of the surface-treated silica 3; and 2 parts by weight of styrene and 1 part by weight of methyl methacrylate as the monomer components were replaced with 1 part by weight of styrene, 1 part by weight of methyl methacrylate and 1 part by weight of methacryloxy polydimethylsiloxane, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 13 nm, a cumulative 50% particle diameter (P50) therein was 26 nm, and a cumulative 90% particle diameter (P90) therein was 33 nm, and the dispersion exhibited a viscosity of 5 mPa·S.

Further, as a result of conducting the same analysis of composition of the colored resin particles as defined in Example 1, it was confirmed that the colored resin particles contained the water-insoluble colorant and the water-insoluble inorganic fine particles in amounts of 51% by weight and 3% by weight, respectively, and further the water-insoluble inorganic fine particles was contained in an amount of 6% by weight based on the weight of the water-insoluble colorant. Also, it was confirmed that the colored resin particles contained the hydrophobic resin and the hydrophilic resin in amounts of 20% by weight and 26% by weight, respectively, i.e., a total resin content thereof was 46% by weight, and further the hydrophobic resin was contained in an amount of 77% by weight based on the weight of the hydrophilic resin.

### Example 4: Water-based dispersion of colored resin particles containing C.I. Pigment-Blue 15:3

The same procedure as defined in Example 1 was conducted except that the C.I. Pigment-Red 122 as the water-insoluble colorant was replaced with C.I. Pigment-Blue 15:3; and 2 parts by weight of styrene and 1 part by weight of methyl methacrylate as the monomer components were replaced with 4 part by weight of styrene and 2 parts by weight of butyl methacrylate, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 20 nm, a cumulative 50% particle diameter (P50) therein was 32 nm, and a cumulative 90% particle diameter (P90) therein was 40 nm, and the dispersion exhibited a viscosity of 6 mPa·S.

### Example 5: Water-based dispersion of colored resin particles containing C.I. Pigment-Blue 15:3

The same procedure as defined in Example 1 was conducted except that the C.I. Pigment-Red 122 as the water-insoluble colorant was replaced with C.I. Pigment-Blue 15:3; and the surface-treated silica 1 was replaced with the surface-treated titanium oxide 1, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 15 nm, a cumulative 50% particle diameter (P50) therein was 35 nm, and a cumulative 90% particle diameter (P90) therein was 41 nm, and the dispersion exhibited a viscosity of 5 mPa·S.

### Example 6: Water-based dispersion of colored resin particles containing C.I. Pigment-Yellow 74

The same procedure as defined in Example 1 was conducted except that the C.I. Pigment-Red 122 as the water-insoluble colorant was replaced with C.I. Pigment-Yellow 74; 1 part by weight of the surface-treated titanium oxide 1 was replaced with 2 parts by weight of the surface-treated silica 3; and 2 parts by weight of styrene and 1 part by weight of methyl methacrylate as the monomer components were replaced with 1 part by weight of styrene, 1 part by weight of methyl methacrylate and 1 part by weight of methacryloxy polydimethylsiloxane, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 19 nm, a cumulative 50% particle diameter (P50) therein was 31 nm, and a cumulative 90% particle diameter (P90) therein was 43 nm, and the dispersion exhibited a viscosity of 5 mPa·S.

Further, as a result of conducting the same analysis of composition of the colored resin particles as defined in Example 1, it was confirmed that the colored resin particles contained the water-insoluble colorant and the water-insoluble inorganic fine particles in amounts of 48% by weight and 9% by weight, respectively, and further the water-insoluble inorganic fine particles was contained in an amount of 19% by weight based on the weight of the water-insoluble colorant. Also, it was confirmed that the colored resin particles contained the hydrophobic resin and the hydrophilic resin in amounts of 19% by weight and 24% by weight, respectively, i.e., a total resin content thereof was 43% by weight, and further the hydrophobic resin was contained in an amount of 79% by weight based on the weight of the hydrophilic resin.

### Example 7: Water-based dispersion of colored resin particles containing C.I. Pigment-Yellow 128

The same procedure as defined in Example 1 was conducted except that the C.I. Pigment-Red 122 as the water-insoluble colorant was replaced with C.I. Pigment-Yellow 128; the surface-treated silica 1 was replaced with the surface-treated alumina 1; the styrene-α-methylstyrene-acrylic acid copolymer as the hydrophilic resin was replaced with a styrene-maleic half ester copolymer (weight-average molecular weight: 8,000; acid value: 200 mg KOH/g); and 2 parts by weight of styrene and 1 part by weight of methyl methacrylate as the monomer components were replaced with 1 part by weight of styrene, 1 part by weight of methyl methacrylate and 1 part by weight of methacryloxy polydimethylsiloxane, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 15 nm, a cumulative 50% particle diameter (P50) therein was 30 nm, and a cumulative 90% particle diameter (P90) therein was 39 nm, and the dispersion exhibited a viscosity of 5 mPa.S.

Further, as a result of conducting the same analysis of composition of the colored resin particles as defined in Example 1, it was confirmed that the colored resin particles contained the water-insoluble colorant and the water-insoluble inorganic fine particles in amounts of 50% by weight and 5% by weight, respectively, and further the water-insoluble inorganic fine particles was contained in an amount of 10% by weight based on the weight of the water-insoluble colorant. Also, it was confirmed that the colored resin particles contained the hydrophobic resin and the hydrophilic resin in amounts of 20% by weight and 25% by weight, respectively, i.e., a total resin content thereof was 45% by weight, and further the hydrophobic resin was contained in an amount of 80% by weight based on the weight of the hydrophilic resin.

### Example 8: Water-based dispersion of colored resin particles containing C.I. Pigment-Black 7

The same procedure as defined in Example 1 was conducted except that the C.I. Pigment-Red 122 as the water-insoluble colorant was replaced with C.I. Pigment-Black 7 (carbon black); the surface-treated silica 1 was replaced with the surface-treated silica 3; and 2 parts by weight of styrene and 1 part by weight of methyl methacrylate as the monomer components were replaced with 4 parts by weight of styrene and 2 parts by weight of ethylhexyl methacrylate, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 19 nm, a cumulative 50% particle diameter (P50) therein was 32 nm, and a cumulative 90% particle diameter (P90) therein was 42 nm, and the dispersion exhibited a viscosity of 5 mPa·S.

### Example 9: Water-based dispersion of colored resin particles containing C.I. Pigment-Green 36

The same procedure as defined in Example 1 was conducted except that the C.I. Pigment-Red 122 as the water-insoluble colorant was replaced with C.I. Pigment-Green 36; and the surface-treated silica 1 was replaced with the surface-treated silica 3, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 18 nm, a cumulative 50% particle diameter (P50) therein was 22 nm, and a cumulative 90% particle diameter (P90) therein was 32 nm, and the dispersion exhibited a viscosity of 5 mPa·S.

### Example 10: Water-based dispersion of colored resin particles containing C.I. Pigment-Red 269

The same procedure as defined in Example 1 was conducted except that the C.I. Pigment-Red 122 as the water-insoluble colorant was replaced with C.I. Pigment-Red 269, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 25 nm, a cumulative 50% particle diameter (P50) therein was 33 nm, and a cumulative 90% particle diameter (P90) therein was 42 nm, and the dispersion exhibited a viscosity of 7 mPa·S.

### Comparative Example 1: (The case where only a hydrophilic resin was used as the resin component, and no water-insoluble inorganic fine particles were contained in colored resin particles) Water-based dispersion of colored resin particles containing C.I. Pigment-Red 122

The same procedure as defined in Example 1 was conducted except that neither water-insoluble inorganic fine particles, surfactant nor monomers were contained in the resultant particles; and the polymerization step was omitted, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 20 nm, a cumulative 50% particle diameter (P50) therein was 53 nm, and a cumulative 90% particle diameter (P90) therein was 84 nm, and the dispersion exhibited a viscosity of 10 mPa·S.

### Comparative Example 2: (The case where only a hydrophilic resin was used as the resin component, and no water-insoluble inorganic fine particles were contained in colored resin particles) Water-based dispersion of colored resin particles containing C.I. Piqment-Yellow 74

The same procedure as defined in Example 1 was conducted except that the C.I. Pigment-Red 122 as the water-insoluble colorant was replaced with C.I. Pigment-Yellow 74; neither water-insoluble inorganic fine particles, surfactant nor monomers were contained in the resultant particles; and the polymerization step was omitted, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 18 nm, a cumulative 50% particle diameter (P50) therein was 27 nm, and a cumulative 90% particle diameter (P90) therein was 38 nm, and the dispersion exhibited a viscosity of 10 mPa·S.

### Comparative Example 3: (The case where no water-insoluble inorganic fine particles were contained in colored resin particles) Water-based dispersion of colored resin particles containing C.I. Pigment-Red 122

The same procedure as defined in Example 1 was conducted except that no surface-treated silica 1 was used for preparing the colored resin particles, thereby obtaining a water-based dispersion of colored resin particles. As a result, it was confirmed that the thus obtained water-based dispersion had such a dispersed particle diameter in which a c,umulative 10% particle diameter (P10) in a number-accumulated particle size distribution thereof was 25 nm, a cumulative 50% particle diameter (P50) therein was 45 nm, and a cumulative 90% particle diameter (P90) therein was 57 nm, and the dispersion exhibited a viscosity of 6 mPa·S.

Essential production conditions used in the above Examples and Comparative Examples are shown in Table 1, and various properties of the thus obtained water-based dispersions are shown in Table 2.

As shown in Table 2, it was apparently confirmed that the colored resin particles and the water-based dispersion thereof produced according to the present invention were dispersed in an extremely finely divided state.

### Example 11: Water-based dispersion of colored resin particles containing C.I. Pigment-Red 122

### (Pre-dispersion step)

10 parts by weight of a styrene-α-methylstyrene-acrylic acid copolymer (weight-average molecular weight: 12,000; acid value: 200 mg KOH/g) as a hydrophilic resin was dissolved in 20 parts by weight of a 1 mol/kg sodium hydroxide aqueous solution, and the resultant solution was mixed with 10 parts by weight of C.I. Pigment-Red 122, 1 part by weight of the surface-treated silica 1, 2 parts by weight of sodium alkylallylsulfosuccinate, 4 parts by weight of styrene, 2 part by weight of methyl methacrylate and 70 parts by weight of ion-exchanged water. The obtained mixture was dispersed using a beads mill filled with 0.1 mmφ zirconia beads at 2000 rpm for 30 min, thereby obtaining a dispersion of particles having a cumulative 50% particle diameter (P50) of 50 nm in a number-accumulated particle size distribution thereof.

### (Polymerization step)

The thus obtained dispersion was mixed with 0.1 part by weight of 2,2'-azobis[N-(2-carboxyethyl)-2-methylpropionamide]hydrate, and the resultant mixture was placed in a four-necked flask equipped with a thermometer, a nitrogen gas-feed pipe, a stirrer and a reflux condenser. The monomer components which were emulsionized in the dispersion at the pre-dispersion step, were polymerized at 80°C for 3 hr in a nitrogen atmosphere, and then allowed to stand for cooling.

### (Acid crystallization step)

The thus obtained dispersion was mixed with 1 mol/kg hydrochloric acid to adjust a pH value thereof to not more than 3, thereby obtaining a precipitate.

### (Water-washing step)

The thus obtained precipitate was subjected to suction filtration using a 0.8 µm-mesh membrane filter, and washed with ion-exchanged water, thereby obtaining a wet cake having a pH value of 5.5. The obtained wet cake was mixed with a 1 mol/kg sodium hydroxide aqueous solution as a basic compound to adjust a pH value thereof to 8.

### (Re-dispersion step)

The resultant mixture was dispersed again using a beads mill filled with 0.1 mmφ zirconia beads at 2000 rpm for 30 min. Then, a water-based dispersion of the colored resin particles (crude) was obtained.

### (Post-treatment step)

The thus obtained dispersion (crude) was filtered through a 0.8 µm-mesh millipore filter to remove coarse particles therefrom, and the resultant filtrate was mixed with a slight amount of ion-exchanged water to adjust a concentration of the water-insoluble colorant contained therein to 10%, thereby obtaining a water-dispersion of colored resin particles according to the present invention.

As a result, it was confirmed that the thus obtained water-based dispersion had such a dispersed particle diameter in which a cumulative 10% particle diameter (P10) in a number-accumulated particle size distribution thereof was 43 nm, a cumulative 50% particle diameter (P50) therein was 53 nm, and a cumulative 90% particle diameter (P90) therein was 77 nm, and the dispersion exhibited a viscosity of 7 mPa·S.

Further, the following procedure was conducted to analyze the composition of the colored resin particles.

A part of the thus obtained water-based dispersion of the colored resin particles was mixed with 1 mol/kg hydrochloric acid to condense the colored resin particles, and the condensed colored resin particles were filtered, washed with water and then dried. Next, 1.00 part by weight of the colored resin particles were sampled, and extracted with toluene using a Soxhlet's extractor to separate and transfer the resin components into toluene. The amount of the remaining insoluble component was 0.36 part by weight. As a result of measuring an infrared absorption spectrum of the insoluble component, it was confirmed that the insoluble component was composed of a quinacridone pigment as the water-insoluble colorant and the surface-treated silica 1 as the water-insoluble inorganic fine particles. The insoluble component was mixed with a mixed solvent composed of 3 parts by weight of dimethylsulfoxide and 1 part by weight of a 10% methanol solution of potassium hydroxide to dissolve quinacridone as the water-insoluble colorant therein. As a result, it was confirmed that the amount of the remaining surface-treated silica 1 as the water-insoluble inorganic fine particles was 0.03 part by weight, and therefore, the amount of the water-insoluble colorant dissolved was 0.33 part by weight.

Next, the toluene solution containing the extracted resin component was filled in a separatory funnel, and a 1 mol/kg sodium hydroxide aqueous solution was added thereto to subject the toluene solution to an extraction procedure. As apparently recognized, the resin remaining in the toluene phase was a hydrophobic resin, whereas the resin extracted into the water phase was a hydrophilic resin. After completion of the extraction procedure, the toluene phase and the water phase were separated from each other, and respectively concentrated. The respective resin components contained in the toluene and water phases were precipitated by adding hexane to the toluene phase and 1 mol/kg hydrochloric acid to the water phase, dried and then recovered. The amount of the hydrophobic resin recovered was 0.29 part by weight, whereas the amount of the hydrophilic resin recovered was 0.35 part by weight.

From the above results, it was confirmed that the colored resin particles contained the water-insoluble colorant and the water-insoluble inorganic fine particles in amounts of 33% by weight and 3% by weight, respectively, and further the water-insoluble inorganic fine particles were contained in an amount of 10% by weight based on the weight of the water-insoluble colorant. Also, it was confirmed that the colored resin particles contained the hydrophobic resin and the hydrophilic resin in amounts of 29% by weight and 35% by weight, respectively, i.e., a total resin content thereof was 64% by weight, and further the hydrophobic resin was contained in an amount of 83% by weight based on the weight of the hydrophilic resin.

### Example 12: Water-based dispersion of colored resin particles containing C.I. Pigment-Red 122

The same procedure as defined in Example 11 was conducted except that the surface-treated silica 1 was replaced with the surface-treated silica 2; and the styrene-α-methylstyrene-acrylic acid copolymer as the hydrophilic resin was replaced with a styrene-maleic half ester copolymer (weight-average molecular weight: 8,000; acid value: 200 mg KOH/g), thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 31 nm, a cumulative 50% particle diameter (P50) therein was 39 nm, and a cumulative 90% particle diameter (P90) therein was 58 nm, and the dispersion exhibited a viscosity of 7 mPa·S.

### Example 13: Water-based dispersion of colored resin particles containing C.I. Pigment-Red 122

The same procedure as defined in Example 11 was conducted except that 1 part by weight of the surface-treated silica 1 was replaced with 0.5 part by weight of the surface-treated silica 3; and 4 parts by weight of styrene and 2 parts by weight of methyl methacrylate as the monomer components were replaced with 4 parts by weight of styrene, 2 parts by weight of methyl methacrylate and 2 parts by weight of methacryloxy polydimethylsiloxane, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 49 nm, a cumulative 50% particle diameter (P50) therein was 62 nm, and a cumulative 90% particle diameter (P90) therein was 87 nm, and the dispersion exhibited a viscosity of 7 mPa·S.

Further, as a result of conducting the same analysis of composition of the colored resin particles as defined in Example 11, it was confirmed that the colored resin particles contained the water-insoluble colorant and the water-insoluble inorganic fine particles in amounts of 33% by weight and 2% by weight, respectively, and further the water-insoluble inorganic fine particles were contained in an amount of 5% by weight based on the weight of the water-insoluble colorant. Also, it was confirmed that the colored resin particles contained the hydrophobic resin and the hydrophilic resin in amounts of 32% by weight and 33% by weight, respectively, i.e., a total resin content thereof was 65% by weight, and further the hydrophobic resin was contained in an amount of 97% by weight based on the weight of the hydrophilic resin.

### Example 14: Water-based dispersion of colored resin particles containing C.I. Piciment-Blue 15:3

The same procedure as defined in Example 11 was conducted except that the C.I. Pigment-Red 122 as the water-insoluble colorant was replaced with C.I. Pigment-Blue 15:3; and 4 parts by weight of styrene and 2 parts by weight of methyl methacrylate as the monomer components were replaced with 4 part by weight of styrene and 2 parts by weight of butyl methacrylate, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 46 nm, a cumulative 50% particle diameter (P50) therein was 56 nm, and a cumulative 90% particle diameter (P90) therein was 79 nm, and the dispersion exhibited a viscosity of 7 mPa·S,

### Example 15: Water-based dispersion of colored resin particles containing C.I. Piqment-Blue 15:3

The same procedure as defined in Example 11 was conducted except that the c.I. Pigment-Red 122 as the water-insoluble colorant was replaced with C.I. Pigment-Blue 15:3; and the surface-treated silica 1 was replaced with the surface-treated titanium oxide 1, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 48 nm, a cumulative 50% particle diameter (P50) therein was 62 nm, and a cumulative 90% particle diameter (P90) therein was 88 nm, and the dispersion exhibited a viscosity of 7 mPa·S.

### Example 16: Water-based dispersion of colored resin particles containing C.I. Pigment-Yellow 74

The same procedure as defined in Example 11 was conducted except that the C.I. Pigment-Red 122 as the water-insoluble colorant was replaced with C.I. Pigment-Yellow 74; 1 part by weight of the surface-treated silica 1 was replaced with 2 parts by weight of the surface-treated titanium oxide 1; and 4 parts by weight of styrene and 2 parts by weight of methyl methacrylate as the monomer components were replaced with 4 parts by weight of styrene, 2 parts by weight of methyl methacrylate and 2 parts by weight of methacryloxy polydimethylsiloxane, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 45 nm, a cumulative 50% particle diameter (P50) therein was 58 nm, and a cumulative 90% particle diameter (P90) therein was 82 nm, and the dispersion exhibited a viscosity of 8 mPa·S.

Further, as a result of conducting the same analysis of composition of the colored resin particles as defined in Example 11, it was confirmed that the colored resin particles contained the water-insoluble colorant and the water-insoluble inorganic fine particles in amounts of 31% by weight and 6% by weight, respectively, and further the water-insoluble inorganic fine particles were contained in an amount of 19% by weight based on the weight of the water-insoluble colorant. Also, it was confirmed that the colored resin particles contained the hydrophobic resin and the hydrophilic resin in amounts of 32% by weight and 31% by weight, respectively, i.e., a total resin content thereof was 63% by weight, and further the hydrophobic resin was contained in an amount of 103% by weight based on the weight of the hydrophilic resin.

### Example 17: Water-based dispersion of colored resin particles containing C.I. Pigment-Yellow 128

The same procedure as defined in Example 11 was conducted except that the C.I. Pigment-Red 122 as the water-insoluble colorant was replaced with C.I. Pigment-Yellow 128; the surface-treated silica 1 was replaced with the surface-treated alumina 1; the styrene-α-methylstyrene-acrylic acid copolymer as the hydrophilic resin was replaced with a styrene-maleic half ester copolymer (weight-average molecular weight: 8,000; acid value: 200 mg KOH/g); and 4 parts by weight of styrene and 2 parts by weight of methyl methacrylate as the monomer components were replaced with 4 parts by weight of styrene, 2 parts by weight of methyl methacrylate and 2 parts by weight of methacryloxy polydimethylsiloxane, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 24 nm, a cumulative 50% particle diameter (P50) therein was 26 nm, and a cumulative 90% particle diameter (P90) therein was 56 nm, and the dispersion exhibited a viscosity of 7 mPa·S.

### Example 18: Water-based dispersion of colored resin particles containing C.I. Pigment-Black 7

The same procedure as defined in Example 11 was conducted except that the C.I. Pigment-Red 122 as the water-insoluble colorant was replaced with C.I. Pigment-Black 7 (carbon black); the surface-treated silica 1 was replaced with the surface-treated silica 3; and 4 parts by weight of styrene and 2 parts by weight of methyl methacrylate as the monomer components were replaced with 4 parts by weight of styrene and 2 parts by weight of ethylhexyl methacrylate, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 45 nm, a cumulative 50% particle diameter (P50) therein was 54 nm, and a cumulative 90% particle diameter (P90) therein was 77 nm, and the dispersion exhibited a viscosity of 7 mPa·S.

### Example 19: Water-based dispersion of colored resin particles containing C.I. Pigment-Green 36

The same procedure as defined in Example 11 was conducted except that the C.I. Pigment-Red 122 as the water-insoluble colorant was replaced with C.I. Pigment-Green 36; and the surface-treated silica 1 was replaced with the surface-treated silica 3, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 39 nm, a cumulative 50% particle diameter (P50) therein was 45 nm, and a cumulative 90% particle diameter (P90) therein was 69 nm, and the dispersion exhibited a viscosity of 8 mPa·S.

### Example 20: Water-based dispersion of colored resin particles containing C.I. Pigment-Red 269

The same procedure as defined in Example 11 was conducted except that the C.I. Pigment-Red 122 as the water-insoluble colorant was replaced with C.I. Pigment-Red 269; and the surface-treated silica 1 was replaced with the surface-treated titanium oxide 1, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 44 nm, a cumulative 50% particle diameter (P50) therein was 55 nm, and a cumulative 90% particle diameter (P90) therein was 79 nm, and the dispersion exhibited a viscosity of 8 mPa·S.

### Comparative Example 4: (The case where only a hydrophilic resin was used as the resin component, and no water-insoluble inorganic fine particles were contained in colored resin particles) Water-based dispersion of colored resin particles containing C.I. Pigment-Red 122

The same procedure as defined in Example 11 was conducted except that neither water-insoluble inorganic fine particles, surfactant nor monomers were contained in the resultant particles; and the polymerization step was omitted, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 52 nm, a cumulative 50% particle diameter (P50) therein was 69 nm, and a cumulative 90% particle diameter (P90) therein was 112 nm, and the dispersion exhibited a viscosity of 10 mPa·S.

### Comparative Example 5: (The case where no water-insoluble inorganic fine articles were contained in colored resin particles) Water-based dispersion of colored resin particles containing C.I. Pigment-Red 122

The same procedure as defined in Example 11 was conducted except that no surface-treated silica 1 was used, thereby obtaining a water-based dispersion of colored resin particles. As a result, it was confirmed that the thus obtained water-based dispersion had such a dispersed particle diameter in which a cumulative 10% particle diameter (P10) in a number-accumulated particle size distribution thereof was 59 nm, a cumulative 50% particle diameter (P50) therein was 72 nm, and a cumulative 90% particle diameter (P90) therein was 121 nm, and the dispersion exhibited a viscosity of 13 mPa·S.

Essential production conditions used in the above Examples and Comparative Examples are shown in Table 3, and various properties of the thus obtained water-based dispersions are shown in Table 4.

As shown in Table 2, it was apparently confirmed that the colored resin particles and the water-based dispersion thereof produced according to the present invention were dispersed in an extremely finely divided state.

### Examples 21:

### [Ink for ink-jet printing]

The respective raw materials were mixed with each other at the following mixing ratio to prepare a dispersion containing the water-insoluble colorant in an amount of 5%. The thus obtained dispersion was passed through a 0.8 µm-mesh millipore filter, thereby obtaining an ink for ink-jet printing according to the present invention.

| Composition of ink: | |
|---|---|
| Water-based dispersion | 50 parts |
| Glycerol | 10 parts |
| Diethyleneglycol | 5 parts |
| SURFINOL 465 (produced by Air Products Co., Ltd.) | 1 part |
| Ion-exchanged water | 34 parts |

The thus obtained ink was evaluated with respect to dispersed particle diameter, viscosity, storage stability, ink ejecting property, color developability on ordinary paper, gloss on glossy paper, transparency, light resistance, water resistance and fixing property thereof.

### Examples 22 to 40 and Comparative Examples 6 to 10:

The same procedure as defined in Example 21 was conducted except that the kind of the water-based dispersion used was variously changed, thereby obtaining an ink for ink-jet printing. The evaluation results are shown in Tables 5 and 6.

As shown in Tables 5 and 6, it was apparently confirmed that the ink for ink-jet printing according to the present invention was excellent in various ink properties.

### Example 41:

### [Ink for color filter]

The ink for color filter according to the present invention was produced by the same method and at the same compositional ratio as those of the ink for ink-jet printing according to the present invention. From the results shown in Tables 5 and 6, it was apparently recognized that the ink for color filter according to the present invention was excellent in various ink properties. Further, in order to determine properties of the ink for color filter, by using inks having three primary colors for color filter including R (red), G (green) and B (blue) which were directly prepared from the inks for ink-jet printing obtained in the above-mentioned Examples, a solid printing was conducted on a special OHP sheet "MJ0PS1N" produced by Epson Corp., by the same method as defined above, and evaluated with respect to a color developability (the results of visual observation of the printed image were classified into Rank A: good color developability and Rank B: poor color developability) and a transparency (the results of measurement of transmittance of the printed image at a maximal wavelength using a UV-VIS spectrophotometer "UV-2100" (manufactured by Shimadzu Co., Ltd.) were classified into Rank A: not less than 50% (as transmittance) and Rank B: less than 50%).

### Examples 42 to 46 and Comparative Examples 11 and 12:

The same procedure as defined in Example 41 was conducted except that the kind of the water-based dispersion used was variously changed, thereby obtaining an ink for color filter. The evaluation results are shown in Tables 7 and 8.

As shown in Tables 5 to 8, it was apparently recognized that the inks for ink-jet printing and color filter according to the present invention were excellent in various ink properties, color developability and transparency.

As seen from the above, the colored resin particles of the present invention are not only excellent in color developability, transparency and gloss, but also exhibit a good light resistance, a good water resistance and a good fixing property. In addition, the colored resin particles exhibit a good dispersion stability upon preparing the water-based dispersion or the ink, and therefore, can be suitably used as a precursor of an ink for ink-jet printing or an ink for color filter.

The water-based dispersion of the present invention is not only excellent in color developability, transparency and gloss, but also exhibits a good light resistance, a good water resistance and a good fixing property. In addition, the water-based dispersion exhibits a good dispersion stability either by itself or upon preparing the ink, and therefore, can be suitably used as a precursor of an ink for ink-jet printing or an ink for color filter.

The ink for ink-jet printing according to the present invention is not only excellent in color developability and transparency, but also exhibits a good light resistance, a good water resistance and a good fixing property. In addition, the ink for ink-jet printing exhibits a good dispersion stability, and therefore, can be suitably used as an ink for ink-jet printing.

The ink for color filter according to the present invention is not only excellent in color developability, transparency and gloss, but also exhibits a good light resistance, a good water resistance and a good fixing property. In addition, the ink for color filter exhibits a good dispersion stability, and therefore, can be suitably used as an ink for color filter.

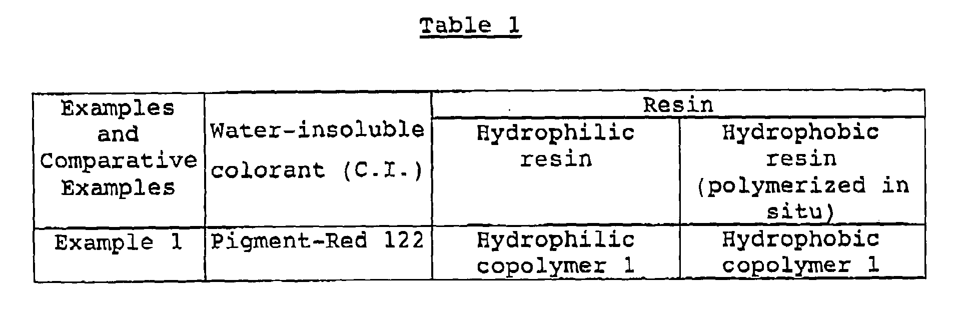

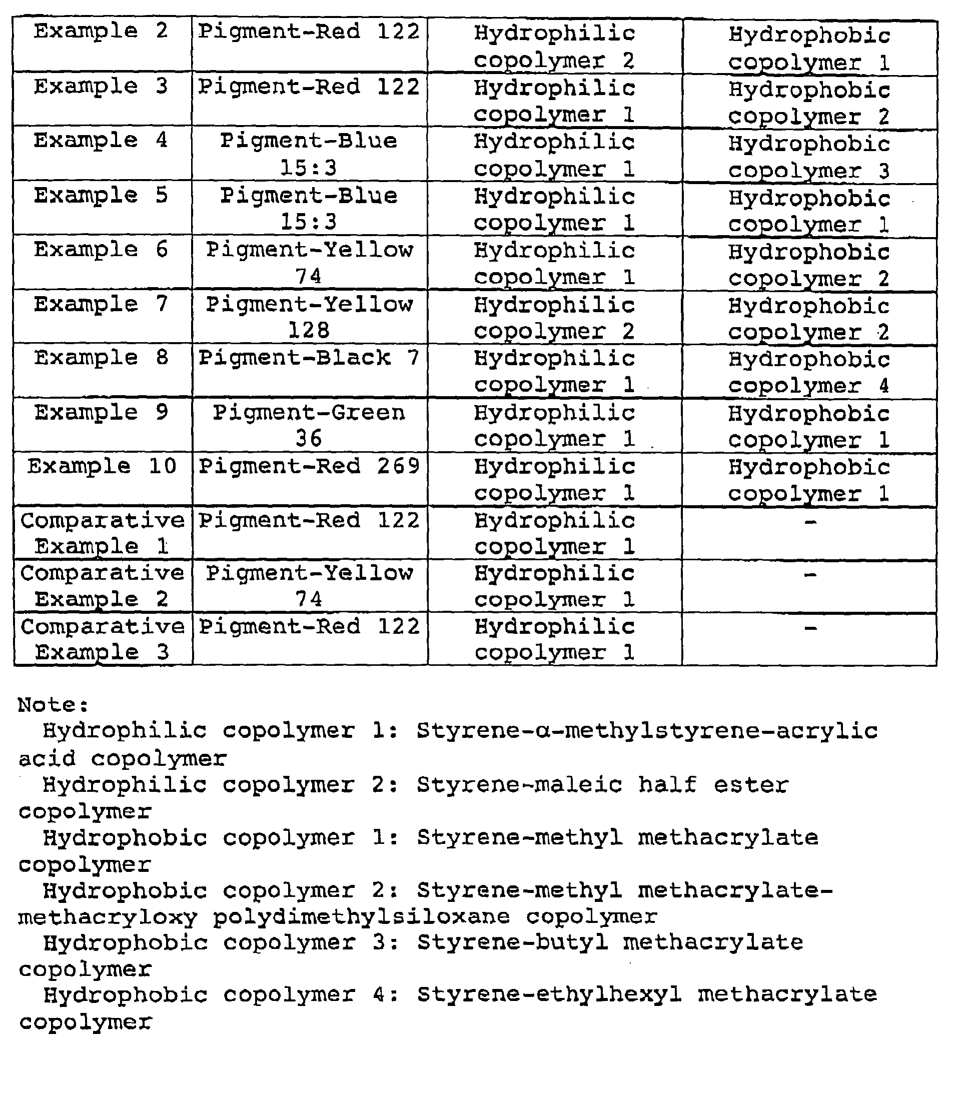

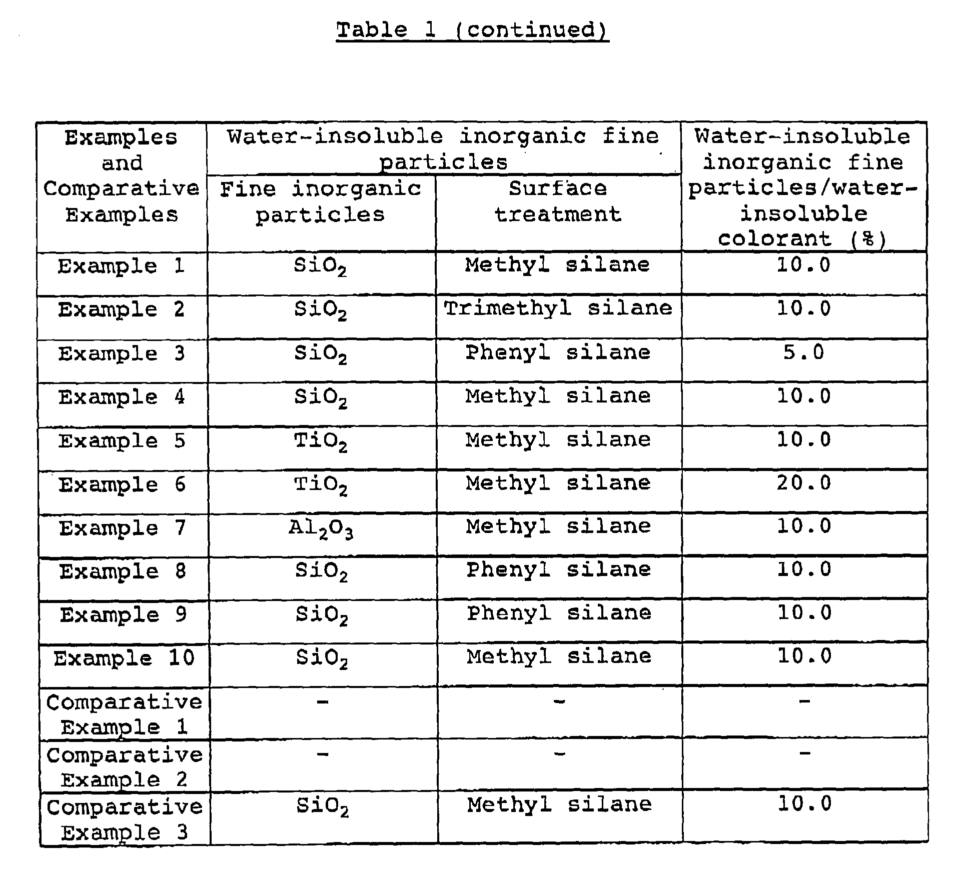

**Table 2**

| Examples and Comparative Examples | Dispersed particle diameter | | | | Viscosity (mPa·S) |
|---|---|---|---|---|---|
| | P10/nm | P50/nm | P90/nm | P90/P50 (-) | |
| Example 1 | 18 | 30 | 42 | 1.4 | 5 |
| Example 2 | 17 | 27 | 42 | 1.6 | 4 |
| Example 3 | 13 | 26 | 33 | 1.3 | 5 |
| Example 4 | 20 | 32 | 40 | 1.3 | 6 |
| Example 5 | 15 | 35 | 41 | 1.2 | 5 |
| Example 6 | 19 | 31 | 43 | 1.4 | 4 |
| Example 7 | 15 | 30 | 39 | 1.3 | 5 |
| Example 8 | 19 | 32 | 42 | 1.3 | 5 |
| Example 9 | 18 | 22 | 32 | 1.5 | 5 |
| Example 10 | 25 | 33 | 42 | 1.3 | 7 |
| Comparative Example 1 | 20 | 53 | 84 | 1.6 | 10 |
| Comparative Example 2 | 18 | 27 | 38 | 1.4 | 10 |
| Comparative Example 3 | 25 | 45 | 57 | 1.3 | 6 |

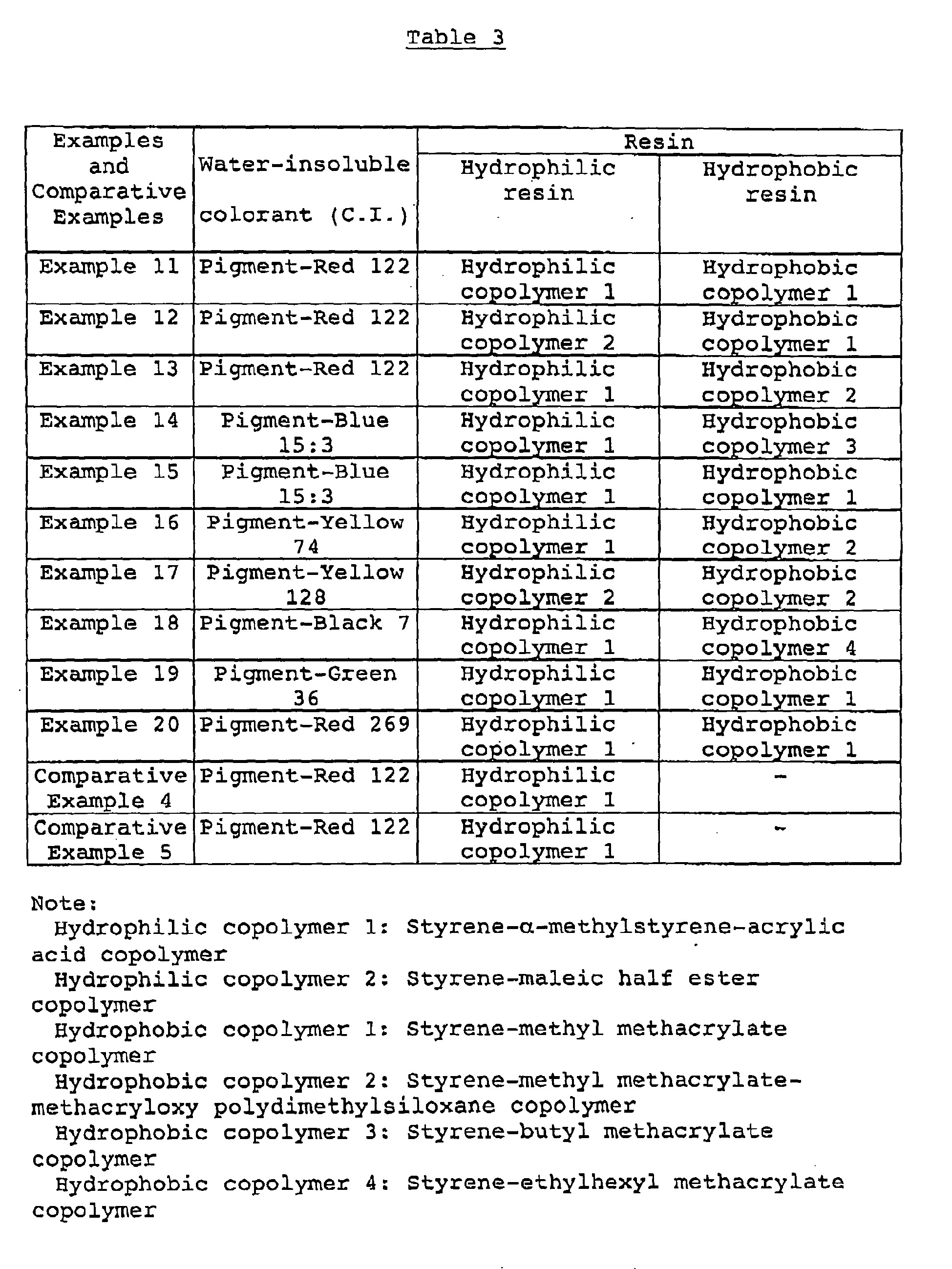

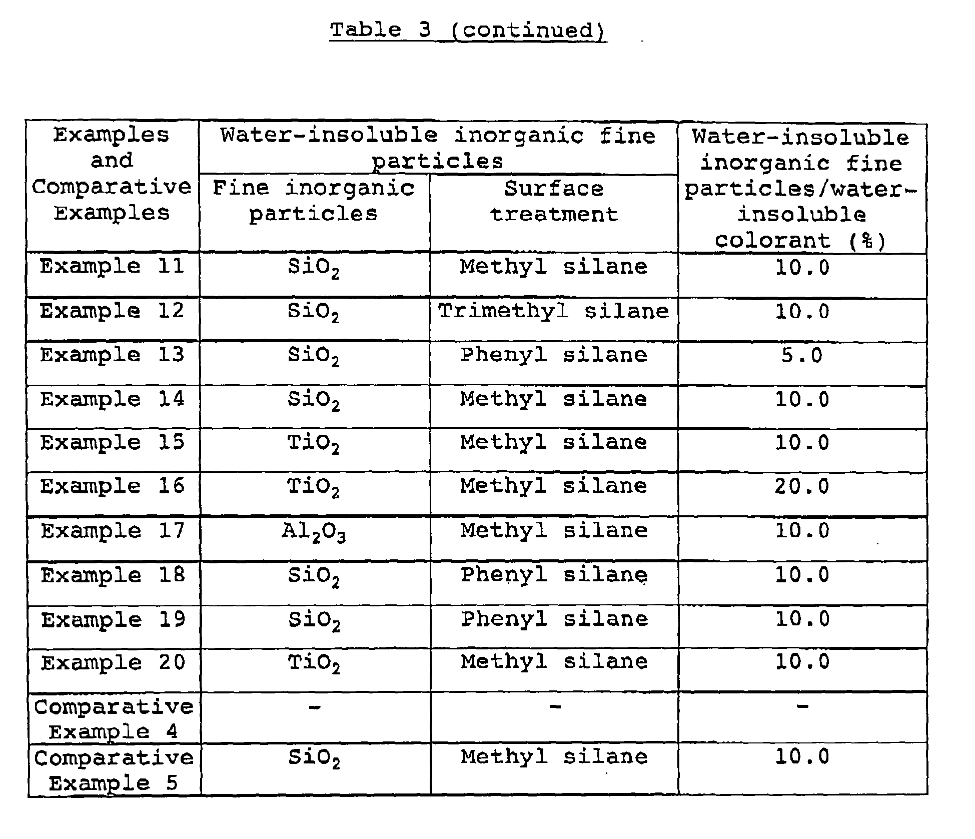

**Table 4**

| Examples and Comparative Examples | Dispersed particle diameter | | | | Viscosity (mPa·S) |
|---|---|---|---|---|---|
| | P10/nm | P50/nm | P90/nm | P90/P50 (-) | |
| Example 11 | 43 | 53 | 77 | 1.5 | 7 |
| Example 12 | 31 | 39 | 58 | 1.5 | 7 |
| Example 13 | 49 | 62 | 87 | 1.4 | 7 |
| Example 14 | 46 | 56 | 79 | 1.4 | 7 |
| Example 15 | 48 | 62 | 88 | 1.4 | 7 |
| Example 16 | 45 | 58 | 82 | 1.4 | 8 |
| Example 17 | 24 | 26 | 56 | 2.2 | 7 |
| Example 18 | 45 | 54 | 77 | 1.4 | 7 |
| Example 19 | 39 | 45 | 69 | 1.5 | 8 |
| Example 20 | 44 | 55 | 79 | 1.4 | 8 |
| Comparative Example 4 | 52 | 69 | 112 | 1.6 | 10 |
| Comparative Example 5 | 59 | 72 | 121 | 1.7 | 13 |

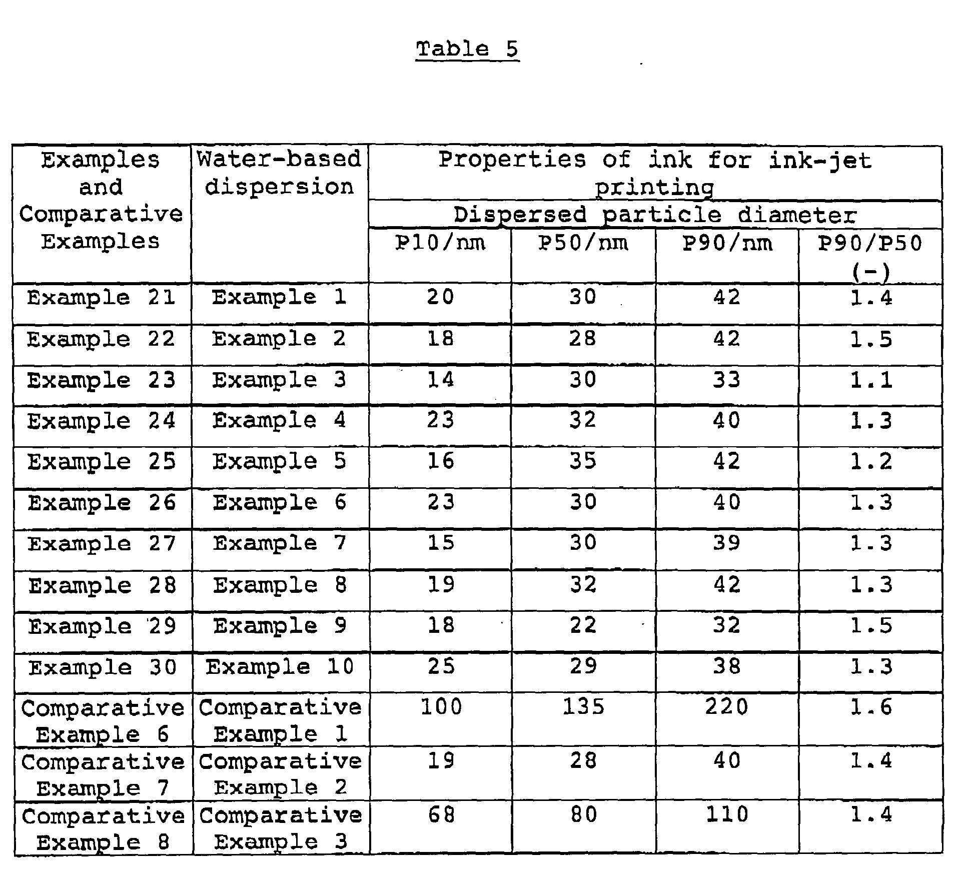

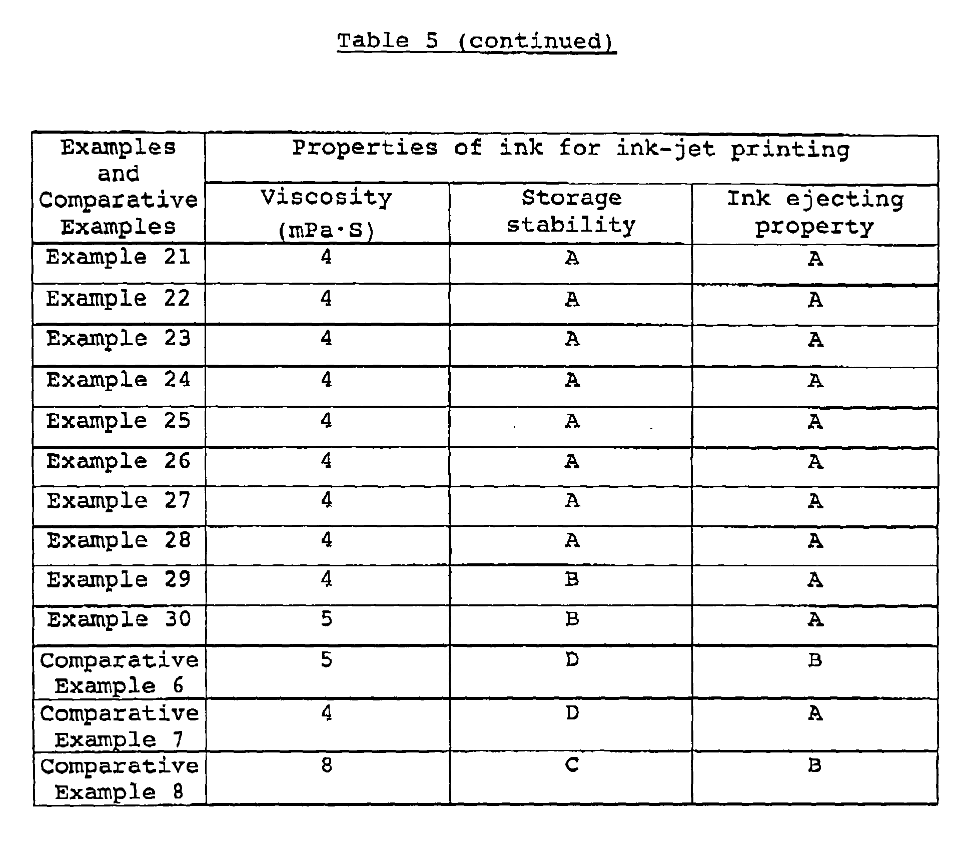

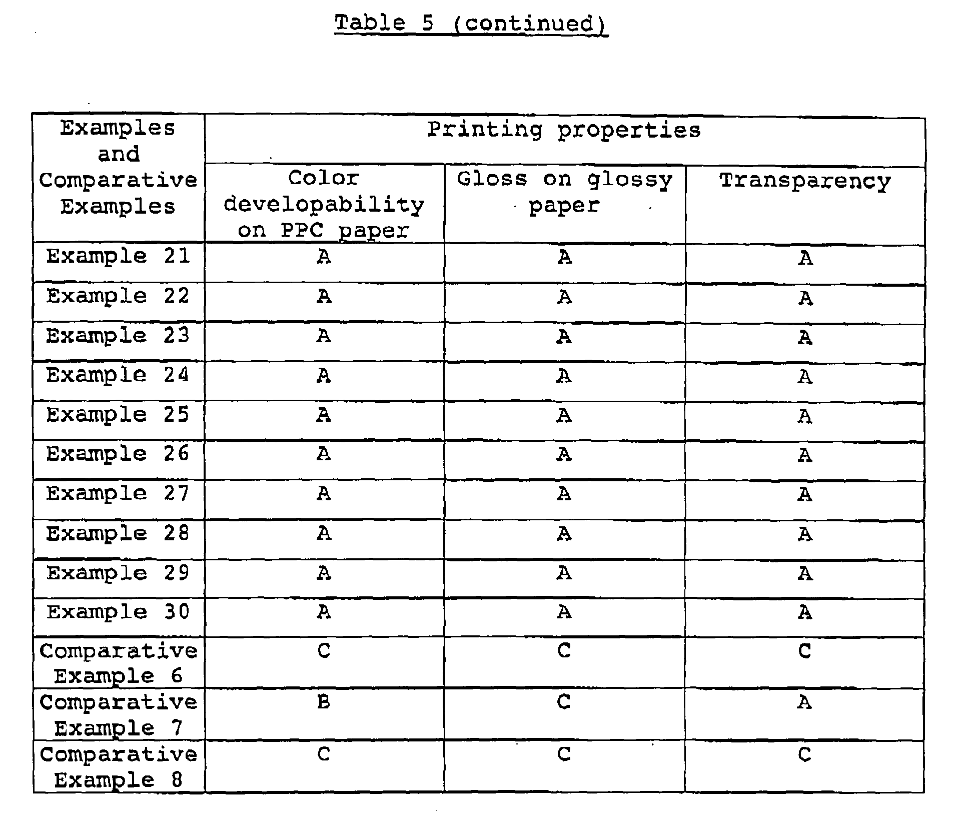

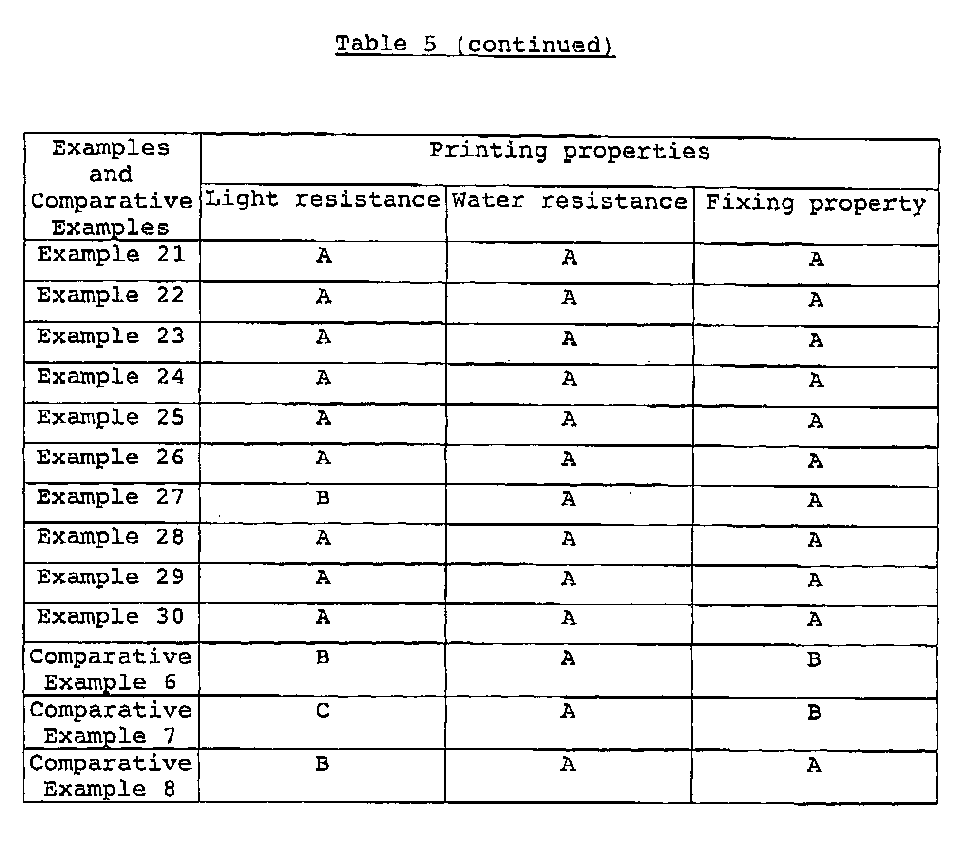

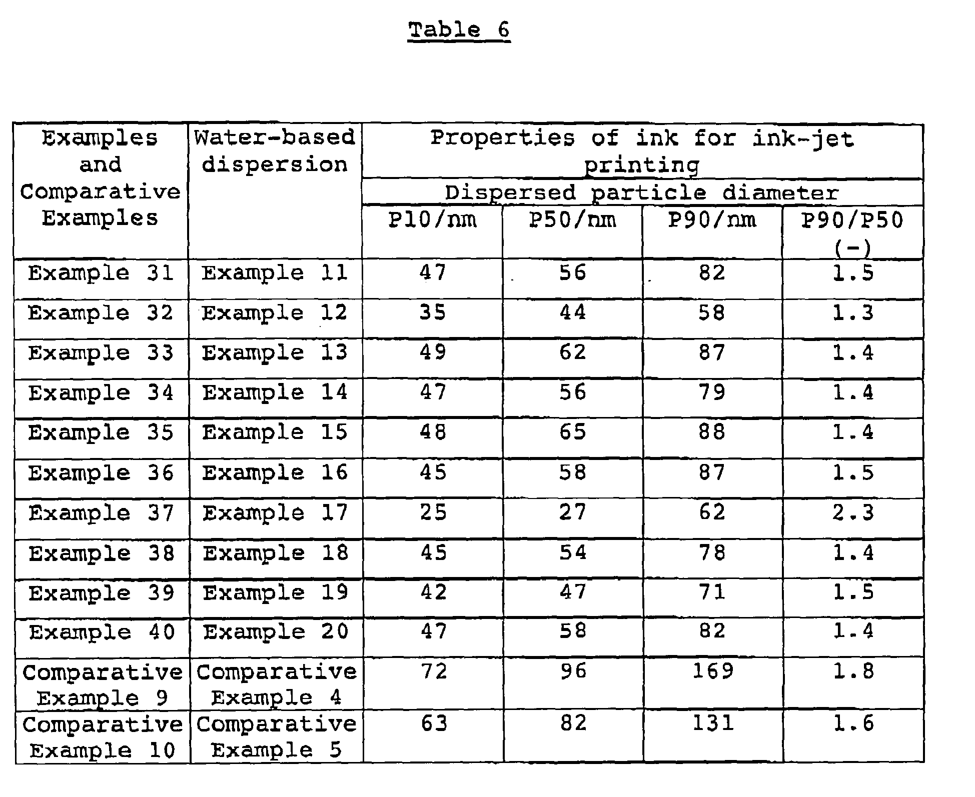

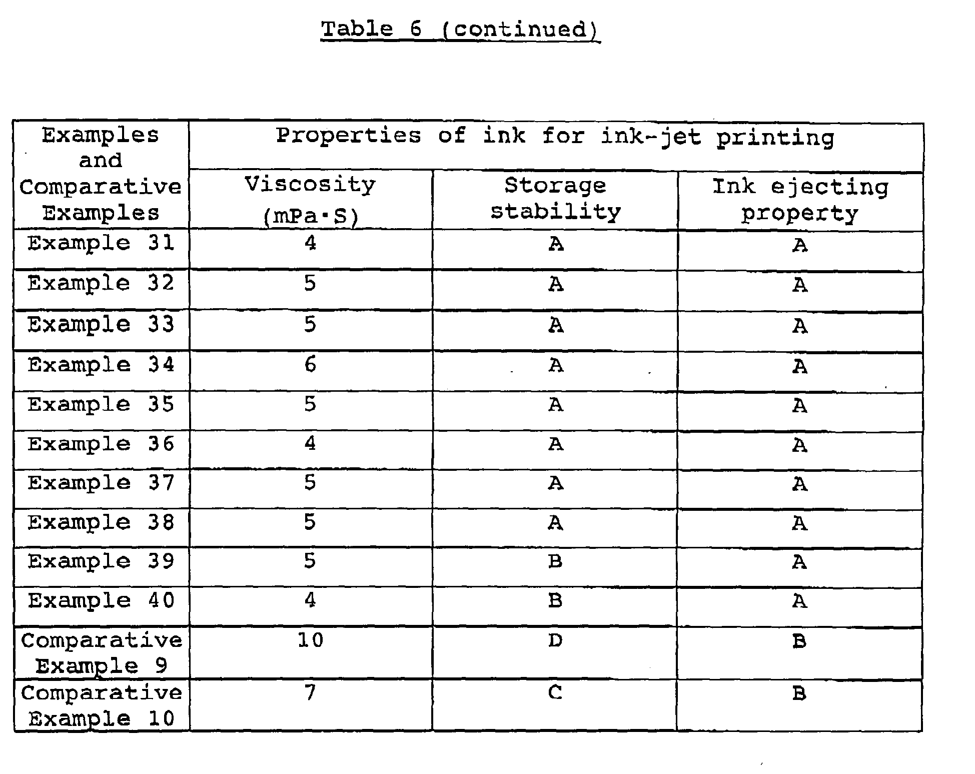

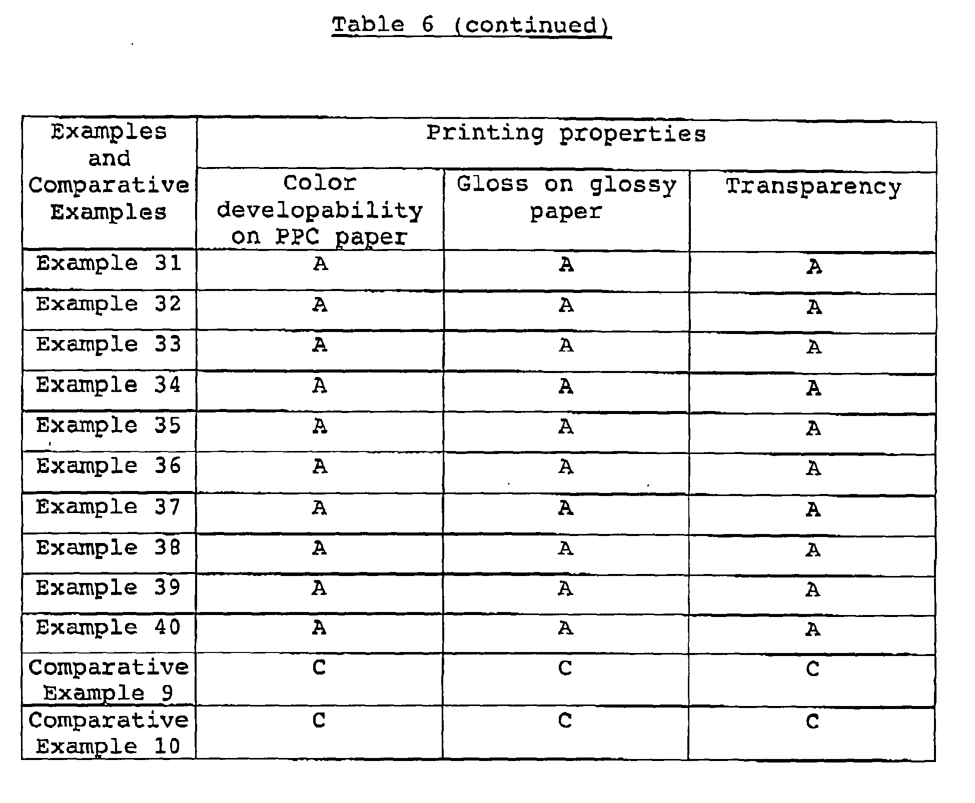

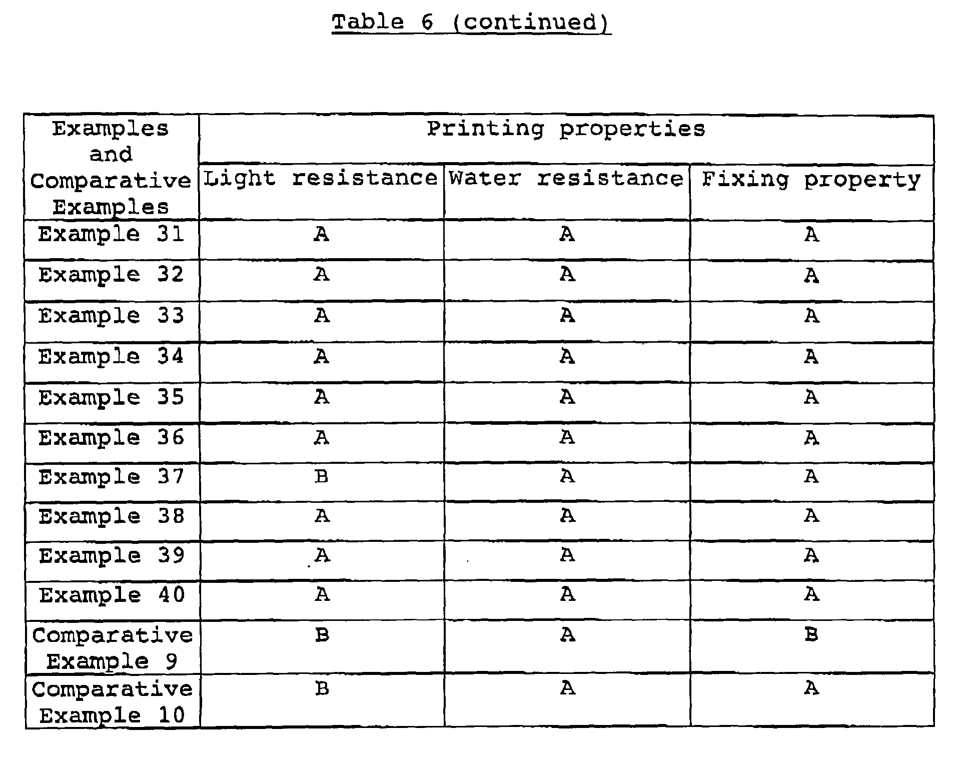

**Table 7**

| Examples and Comparative Example | Kind of ink used | Color developability | Transparency |
|---|---|---|---|
| Example 41 | Example 24 | A | A |
| Example 42 | Example 29 | A | A |
| Example 43 | Example 30 | A | A |
| Comparative Example 11 | Comparative Example 6 | B | B |

**Table 8**

| Examples and Comparative Example | Kind of ink used | Color developability | Transparency |
|---|---|---|---|
| Example 44 | Example 34 | A | A |
| Example 45 | Example 39 | A | A |
| Example 46 | Example 40 | A | A |
| Comparative Example 12 | Comparative Example 9 | B | B |

## Claims

1. Colored resin particles comprising:
- a composite resin comprising at least one hydrophilic resin and at least one hydrophobic resin which are respectively selected from styrene acrylic resins, silicone resins, polyester resins and urethane resins;
- a water-insoluble colorant; and
- water-insoluble inorganic fine particles in an amount of 1 to 50% by weight based on the weight of the water-insoluble colorant.

2. Colored resin particles according to claim 1, wherein the water-insoluble inorganic fine particles comprise at least one material selected from silicone oxide, titanium oxide and aluminum compounds.

3. Colored resin particles according to claim 1 or 2, wherein the surfaces of the water-insoluble inorganic fine particles are hydrophobilized.

4. Colored resin particles according to any one of the preceding claims, wherein the cumulative 90% particle diameter (P90) in a number-accumulated particle size distribution of the colored resin particles as measured with respect to a dispersed particle diameter thereof upon being dispersed in a water-based dispersion medium, is not more than 50 nm.

5. Colored resin particles according to any one of claims 1 to 3, wherein the cumulative 90% particle diameter (P90) in a number-accumulated particle size distribution of the colored resin particles as measured with respect to a dispersed particle diameter thereof upon being dispersed in a water-based dispersion medium, is from 50 nm to 100 nm.

6. A water-based dispersion comprising the colored resin particles as defined in any one of the preceding claims and a water-based dispersion medium.

7. A water-based dispersion according to claim 6, wherein the cumulative 90% particle diameter (P90) in a number-accumulated particle size distribution of the colored resin particles as measured with respect to a dispersed particle diameter thereof, is not more than 50 nm.

8. A water-based dispersion according to claim 6, wherein the cumulative 90% particle diameter (P90) in a number-accumulated particle size distribution of the colored resin particles as measured with respect to a dispersed particle diameter thereof, is from 50 nm to 100 nm.

9. A water-based dispersion according to claim 6, wherein the ratio of the cumulative 90% particle diameter (P90) in a number-accumulated particle size distribution of the colored resin particles to a cumulative 50% particle diameter (P50) in a numbered-accumulated particle size distribution of the colored resin particles as measured with respect to a dispersed particle diameter thereof, is not more than 5:1.

10. An ink for ink-jet printing, comprising the colored resin particles as defined in any one of claims 1 to 5 or the water-based dispersion as defined in any one of claims 6 to 9.

11. An ink for color filter, comprising the colored resin particles as defined in any one of claims 1 to 5 or the water-based dispersion as defined in any one of claims 6 to 9.
